# FASCICULE DE BREVET EUROPEEN

(11) **EP 2 743 679 B1**
(45) Date de publication et mention de la délivrance du brevet: **25.09.2019**
(21) Numéro de dépôt: 13196623.6
(22) Date de dépôt: 11.12.2013
(51) Int. Cl.: G01N 21/3504, G01J 3/42, G08B 21/14, G08B 21/16, G01J 5/20, G01J 5/04, G01J 5/00

(54) **Dispositif de detection infrarouge**
Infraroterkennungsgerät
Infrared detection device

(30) Priorité: 17.12.2012 FR 1262132
(43) Date de publication de la demande: 18.06.2014
(73) Titulaire: Commissariat à l'Énergie Atomique et aux Énergies Alternatives, 75015 Paris (FR); ULIS, 38113 Veurey Voroize (FR)
(72) Inventeur: Yon, Jean-Jacques, 38360 Sassenage (FR); Bercier, Emmanuel, 38360 Noyarey (FR)
(74) Mandataire: Ilgart, Jean-Christophe

(56) Documents cités:
- DE-A1-102004 015 439
- FR-A1- 2 866 115
- US-A1- 2002 096 492
- US-A1- 2005 161 605
- US-B1- 7 119 337

## Description

### DOMAINE TECHNIQUE

L'invention concerne un dispositif de détection infrarouge avantageusement utilisé pour réaliser à la fois une fonction de détection d'éléments (personnes, objets) ou de mouvements dans le spectre infrarouge, par exemple pour réaliser une détection de l'activité de personnes, et une fonction de détection de gaz.

Un tel dispositif peut notamment être utilisé dans le domaine de l'automatisme ou de la gestion du confort de personnes à l'intérieur d'un bâtiment.

### ÉTAT DE LA TECHNIQUE ANTÉRIEURE

Pour réaliser une détection de l'activité de personnes ou une détection de mouvements, il est connu de faire appel à des dispositifs de détection infrarouge de type PIR (« *Passive InfraRed sensor* »). Ces dispositifs sont généralement formés d'un à quatre détecteurs infrarouge élémentaires, ou pixels, réalisés par exemple à partir d'un matériau pyroélectrique, intégrés dans un boîtier hermétique, et montés sur une carte électronique. L'ensemble est positionné derrière un élément optique, par exemple une lentille de Fresnel sectorisée, réalisée en un matériau plastique transparent au rayonnement infrarouge. Chaque secteur de la lentille de Fresnel vise une zone particulière de la scène à surveiller, avec éventuellement un chevauchement entre ces zones. Les pixels infrarouges sont sensibles aux flux thermique émis par les objets présents dans leur environnement. Ces pixels fournissent un signal électrique dont les caractéristiques dépendent notamment de la température de l'objet se trouvant en regard des pixels. Ainsi, lorsqu'une personne se déplace dans le champ optique du dispositif PIR, le flux thermique que cette personne émet est collecté et focalisé sur l'un ou l'autre des pixels du dispositif PIR, selon le secteur de la lentille de Fresnel que la personne traverse. De cette manière, les pixels traduisent le déplacement détecté d'une personne par une transition, ou modification, de leur signal de sortie.

Du fait que l'émission du rayonnement infrarouge est pour l'essentiel indépendante de l'illumination ambiante, un tel détecteur infrarouge fonctionne aussi bien en pleine lumière que dans l'obscurité la plus totale. Cette caractéristique est importante, notamment pour des applications de contrôle automatique d'éclairage où il peut être nécessaire de détecter par exemple l'arrivée d'une personne dans une pièce obscure avant d'activer l'éclairage. La détection du rayonnement infrarouge offre de surcroit une image capturée qui est quasi invariante avec l'éclairage qui change généralement au cours de la journée, et permet donc d'utiliser des algorithmes de traitement du signal plus simples, et donc plus économes en énergie et plus robustes à la fois.

Les capacités de discrimination des dispositifs PIR restent toutefois très rudimentaires en raison de leur faible nombre de pixels. Un dispositif PIR ne peut par exemple pas faire la différence entre la présence d'un humain ou d'un animal de compagnie, ce qui peut être problématique pour commander la mise en route d'un radiateur de chauffage. Ces confusions conduisent à des fausses alertes de détection dont la réduction de leur nombre appelle des recommandations d'installation contraignantes dans les bâtiments et/ou des processus d'apprentissage logiciel qui complexifient l'équipement de détection.

Le document US 2005/0161605 A1 décrit un dispositif de détection infrarouge comportant un dispositif de détection de gaz 100 qui comprend : une couche résistive 45 dont une première portion 45a est apte à réaliser une émission d'un premier rayonnement infrarouge dans une première gamme de longueurs d'ondes aptes à être absorbées par le ou les gaz à détecter, et dont une deuxième portion 45b est couplée thermiquement à un premier élément 80 correspondant à un élément apte à absorber le premier rayonnement infrarouge destiné à être détecté; un substrat 40 disposé sur un premier circuit électronique 90 de commande et de lecture du dispositif de détection de gaz; des portions de matériau électriquement conducteur 33,47, 48 reliant électriquement la première portion 45a de la couche résistive 45 au premier circuit électronique 90; et dans lequel une distance entre la première portion 45a de la couche résistive 45 et le substrat 40 est sensiblement égale à une distance entre la deuxième portion 45b de la couche résistive 45 et le substrat 40.

Il existe toutefois des détecteurs infrarouges comprenant des composants plus résolus où le nombre de pixels est étendu à plusieurs centaines, voire quelques dizaines de milliers, arrangés sous la forme d'une matrice bidimensionnelle de pixels. Cette matrice est placée au foyer d'une optique qui projette la scène infrarouge sur le plan des détecteurs, comme par exemple décrit dans le document US 5 021 663.

Pour réaliser une détection de gaz, par exemple dans le but d'analyser une qualité d'air et/ou mesurer une teneur en certains gaz dans un environnement, il existe également des dispositifs infrarouges de type NDIR (*« Non Dispersive InfraRed »*). Ces dispositifs exploitent les propriétés d'absorption des gaz pour certaines longueurs d'ondes situées dans le spectre infrarouge. Par exemple, le dioxyde de carbone (CO₂) se caractérise par deux bandes d'absorption situées respectivement à 4,2 µm (mode dit d'étirement ou *« stretching* ») et à 15,1 µm (mode dit de pliage ou *« bending* »). De nombreux autres gaz présentent également des bandes d'absorption dans le domaine de l'infrarouge, comme par exemple le monoxyde de carbone (CO), la vapeur d'eau (H₂O), le méthane (CH₄), les CFC, le N₂O, etc.

Un dispositif de type NDIR associe une source infrarouge (qui peut être large spectre), un filtre étroit prévu pour isoler une bande spectrale correspondant au gaz que l'on souhaite mesurer, et un détecteur infrarouge destiné à détecter cette bande spectrale, comme par exemple décrit dans le document US 6 373 056.

Bien qu'il existe d'autres dispositifs pour mesurer des concentrations de gaz (dispositifs électrochimiques par exemple), l'utilisation de dispositifs NDIR est généralement considérée comme la meilleure méthode de mesure, notamment du fait de leur capacité à détecter un large éventail de molécules gazeuses.

Lorsque l'on souhaite réaliser à la fois une détection d'activité et une détection de gaz, il est nécessaire de faire appel à ces deux types de détecteurs.

### EXPOSÉ DE L'INVENTION

Un but de la présente invention est de proposer un dispositif de détection infrarouge comportant au moins un dispositif de détection de gaz, qui soit compatible technologiquement avec une matrice de détecteurs infrarouges afin de pouvoir intégrer le dispositif de détection de gaz et la matrice de détecteurs infrarouges au sein d'un même élément et de les réaliser via la mise en oeuvre d'étapes communes et de même nature.

Pour cela, la présente invention propose un dispositif de détection infrarouge comportant au moins un dispositif de détection selon la revendication 1.

L'invention propose donc la réalisation d'un dispositif de détection de gaz de type infrarouge sous la forme de micro-ponts suspendus. Le terme « micro-ponts suspendus » est utilisé ici pour désigner le fait que les portions de la couche résistive sont réalisées au-dessus du substrat et maintenues à une certaine distance du substrat par les portions de matériau électriquement conducteur.

Du fait que les portions de la couche résistive, contribuant à l'émission et à la détection du rayonnement infrarouge servant à la détection de gaz, sont disposées, vis-à-vis du substrat, à des distances sensiblement similaires, un tel dispositif peut donc être réalisé sous la forme d'un microsystème intégré comportant une source infrarouge et un capteur infrarouge réalisés sous forme de micro-ponts suspendus et formant un dispositif de détection de gaz de type NDIR, par exemple réalisés via la mise en oeuvre d'étapes technologiques communes.

Dans un tel microsystème, par exemple destiné à être utilisé à l'intérieur d'un bâtiment pour réaliser une détection de l'activité des personnes et une analyse de la qualité de l'air, le dispositif comporte une matrice de détecteurs infrarouges apte à produire une représentation infrarouge bidimensionnelle pour analyser ou détecter des mouvements. Les détecteurs infrarouges de la matrice de détection d'activité, le capteur infrarouge et le ou les émetteurs infrarouges pour la détection de gaz, sont en outre tous construits sous la forme de micro-ponts suspendus, au-dessus d'une même surface du substrat et maintenus à une même distance de ce substrat. Les différentes portions de matériau résistif de ces dispositifs infrarouges sont toutes construites simultanément à partir d'au moins une même couche résistive, selon le même procédé technologique de fabrication de micro-ponts, ce qui permet à la fois de réduire les coûts de fabrication et de réduire leur consommation énergétique. L'intégration de ces deux fonctions de détection infrarouge au sein d'un même dispositif facilite également les communications entre les éléments remplissant ces deux fonctions.

La première portion de la couche résistive permet de dissiper de la chaleur par effet Joule pour réaliser l'émission du premier rayonnement infrarouge. La deuxième portion de la couche résistive permet de coupler des porteurs libres avec le rayonnement infrarouge reçu. La couche résistive correspond par exemple à une couche métallique, ou à une couche de semi-conducteur dopé.

Le couplage thermique entre la deuxième portion de la couche résistive et le premier élément de transduction thermorésistive permet à la deuxième portion de la couche résistive d'absorber le rayonnement infrarouge reçu et donc de chauffer, le premier élément de transduction thermorésistive absorbant la chaleur émise par la deuxième portion, ce qui modifie la résistivité de ce premier élément de transduction thermorésistive. Le lien électrique, direct ou indirect, formé par les portions de matériau électriquement conducteur entre le premier élément de transduction thermorésistive et le premier circuit électronique permet au circuit électronique de mesurer ce changement de résistivité.

La première portion et la deuxième portion de la couche résistive sont isolées électriquement l'une de l'autre puisque les fonctions d'émission et de détection du premier rayonnement infrarouge sont réalisées par deux éléments distincts du dispositif de détection de gaz. La première portion de la couche résistive fait donc partie d'un émetteur infrarouge du dispositif de détection de gaz, et la deuxième portion de la couche résistive couplée au premier élément de transduction thermorésistive fait partie d'un capteur infrarouge du dispositif de détection de gaz.

Le dispositif comporte en outre une matrice de détecteurs infrarouges telle que chaque détecteur infrarouge comporte au moins :
- une troisième portion de la couche résistive couplée thermiquement à au moins un deuxième élément de transduction thermorésistive d'un deuxième rayonnement infrarouge dans une deuxième gamme de longueurs d'onde destiné à être détecté ;
- des portions de matériau électriquement conducteur reliant électriquement le deuxième élément de transduction thermorésistive à un deuxième circuit électronique de commande et de lecture de la matrice de détecteurs infrarouges réalisé dans le substrat, et assurant un maintien mécanique de la troisième portion de la couche résistive en regard du substrat tel qu'une distance entre la troisième portion de la couche résistive et le substrat soit sensiblement égale à la distance entre la deuxième portion de la couche résistive et le substrat.

La troisième portion de la couche résistive est isolée électriquement de la première et de la deuxième portions de la couche résistive.

Un tel dispositif, par exemple utilisé dans le domaine de l'automatisme des bâtiments, comporte donc deux types d'éléments de détection infrarouge, l'un utilisé pour une détection de gaz et l'autre utilisé pour une détection de personnes ou d'activité, intégrés au sein d'un même dispositif. On évite ainsi l'équipement des pièces d'un bâtiment avec deux types de capteurs distincts, ce qui en réduit les coûts d'installation et facilite la communication entre eux.

Le premier et le deuxième circuits électroniques peuvent correspondre à un seul dispositif, par exemple réalisé sous la forme d'un unique circuit intégré, pouvant comporter plusieurs blocs fonctionnels dédiés à la commande et au traitement de signaux issus des éléments émetteur et récepteur du dispositif de détection de gaz et de la matrice de détecteurs infrarouges.

Chaque détecteur infrarouge peut comporter en outre au moins une portion de matériau métallique réflecteur disposée entre le substrat et la troisième portion de la couche résistive du détecteur infrarouge, la distance entre la troisième portion de la couche résistive et la portion de matériau métallique réflecteur, dans chacun des détecteurs infrarouges, étant égale à environ un quart d'une longueur d'onde appartenant à la deuxième gamme de longueurs d'ondes et destinée à être détectée par le détecteur infrarouge. On réalise ainsi, au sein des détecteurs infrarouges, des cavités de type « quart d'ondes » qui permettent une bonne adaptation d'impédance électromagnétique (relative au couplage d'onde électromagnétique avec la couche résistive) à la fois du dispositif de détection de gaz et de la matrice de détecteurs infrarouges tout en ayant les portions de matériau résistif du dispositif de détection de gaz et de la matrice de détecteurs infrarouges qui soient disposées à une même distance du substrat. La matrice de détecteurs infrarouges peut correspondre à une matrice de micro-bolomètres.

Chacune des troisièmes portions de la couche résistive peut comporter une impédance électromagnétique sensiblement égale au double d'une impédance électromagnétique de la deuxième portion de la couche résistive.

La matrice de détecteurs infrarouges peut être couplée optiquement à un système optique de focalisation.

Le dispositif peut comporter en outre au moins une portion de matériau dont la résistivité est supérieure à celle du matériau de la couche résistive, disposée sur la première portion de la couche résistive tel que le premier rayonnement infrarouge soit destiné à être émis à travers ladite portion de matériau. Cette portion de matériau peut être issue d'une couche dont d'autres portions forment le premier et/ou le deuxième élément transducteur thermorésistif, et correspond par exemple à du semi-conducteur tel que du silicium amorphe.

Le premier élément de transduction thermorésistive peut comporter une première portion de silicium amorphe et/ou, lorsque le dispositif comporte la matrice de détecteurs infrarouges, le deuxième élément de transduction thermorésistive peut comporter une deuxième portion de silicium amorphe et/ou, lorsque le dispositif comporte la portion de matériau dont la résistivité est supérieure à celle du matériau de la couche résistive, ladite portion de matériau peut être à base de silicium amorphe.

Le dispositif peut comporter en outre un boitier dans lequel sont enfermés hermétiquement le dispositif de détection de gaz et/ou la matrice de détecteurs infrarouges, le boitier comportant au moins une première portion de matériau transparent vis-à-vis de la première gamme de longueurs d'ondes disposée en regard du dispositif de détection de gaz et/ou au moins une deuxième portion de matériau transparent vis-à-vis de la deuxième gamme de longueurs d'ondes disposée en regard de la matrice de détecteurs infrarouges.

Le dispositif peut comporter en outre :
- un premier filtre optique couplé à la première portion de matériau transparent vis-à-vis de la première gamme de longueurs d'ondes et apte à réaliser un filtrage optique tel que seules les longueurs d'ondes destinées à être absorbées par le ou les gaz à détecter puissent traverser le premier filtre optique, et/ou
- un deuxième filtre optique couplé à la deuxième portion de matériau transparent vis-à-vis de la deuxième gamme de longueurs d'ondes et apte à réaliser un filtrage optique tel que seules les longueurs d'ondes de la deuxième gamme de longueurs d'ondes puissent traverser le deuxième filtre optique.

La couche résistive peut comporter du TiN et/ou du MoSi₂ et/ou du WSi₂.

Le dispositif peut comporter en outre un dispositif de réflexion optique disposé dans une enceinte destinée à contenir le ou les gaz à détecter et apte à réfléchir le premier rayonnement infrarouge émis par la première portion de la couche résistive vers la deuxième portion de la couche résistive.

La couche résistive peut être telle que le rapport de la résistivité du matériau de la couche résistive sur l'épaisseur de la couche résistive est égal à environ 188 Ohms.

L'invention concerne également un procédé de réalisation d'un dispositif de détection infrarouge selon la revendication 12.

Le procédé peut comporter en outre, avant le dépôt de la couche de matériau sacrificiel sur le substrat, la réalisation, sur le substrat, de portions de matériau métallique réflecteur telles que chaque portion de matériau métallique réflecteur soit disposée entre le substrat et l'une des troisièmes portions de la couche résistive, la distance entre ladite une des troisièmes portions de la couche résistive et ladite portion de matériau métallique réflecteur pouvant être égale à environ un quart d'une longueur d'onde appartenant à la deuxième gamme de longueurs d'ondes et destinée à être détectée par la matrice de détecteurs infrarouges. On réalise ainsi, au sein des détecteurs infrarouges, des cavités quart d'onde qui permettent d'avoir une bonne adaptation d'impédance électromagnétique, permettant une bonne absorption du rayonnement électromagnétique.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un dispositif de détection infrarouge, objet de la présente invention, selon un mode de réalisation particulier ;
- les figures 2a à 2f et 4 représentent des étapes d'un procédé de réalisation d'un dispositif de détection infrarouge, objet de la présente invention, selon un mode de réalisation particulier;
- les figures 3a à 3c représentent des vues de dessus d'éléments d'un dispositif de détection infrarouge, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

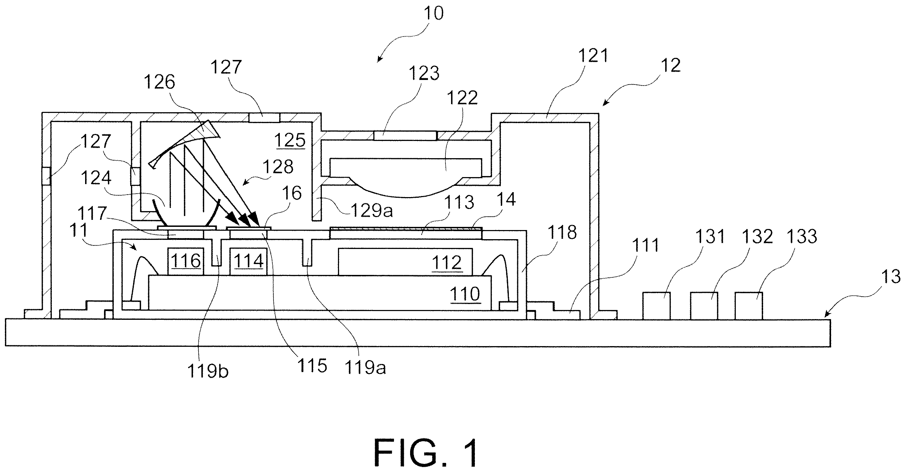

La figure 1 représente un exemple de réalisation d'un dispositif de détection infrarouge 10, réalisé sous la forme d'un microsystème dont les différents éléments électroniques formant un dispositif de détection de gaz 11 et une matrice de détecteurs infrarouges 112 sont enfermés dans un boîtier optique 12 disposé sur un support correspondant ici à une carte électronique 13.

Le dispositif 10 comporte un circuit électronique de commande et de lecture 110 réalisé sous la forme d'un circuit intégré par exemple en technologie CMOS. Le dispositif de détection de gaz 11 comporte un capteur infrarouge 114 apte à réaliser une détection infrarouge dans une première gamme de longueurs d'ondes du domaine infrarouge et un émetteur infrarouge 116 formant une source émettrice infrarouge dont le spectre d'émission correspond au moins en partie au domaine de détection du capteur infrarouge 114. Le capteur infrarouge 114 et l'émetteur infrarouge 116 sont intégrés sur le circuit électronique 110 qui réalise la commande et la lecture du capteur infrarouge 114 et de l'émetteur infrarouge 116.

La matrice de détecteurs infrarouges 112, formant une matrice de pixels infrarouges aptes à réaliser une détection dans une deuxième gamme de longueurs d'ondes du domaine infrarouge, est également intégrée sur le circuit électronique 110 qui réalise également la commande et la lecture des détecteurs infrarouges de la matrice 112. La matrice 112 correspond par exemple à une matrice carrée dont le nombre de pixels, c'est-à-dire le nombre de détecteurs infrarouges, par ligne et par colonne est compris entre environ 30 et 100. Des formats plus grands peuvent être prévus, notamment lorsque le champ d'observation l'exige (hall de grandes dimensions par exemple). Les éléments 110, 112, 114 et 116 sont montés dans un boîtier 118 qui dispose de différentes fenêtres 113, 115, 117 en regard respectivement des éléments 112, 114, 116 et qui sont transparentes aux gammes de longueurs d'ondes d'émission ou de réception respectives de ces éléments. Le boîtier 118 est fermé hermétiquement pour protéger les dispositifs 110, 112, 114 et 116 de l'environnement extérieur.

La fenêtre 113 qui est disposée en regard de la matrice de détecteurs infrarouges 112 est réalisée en un matériau transparent à la deuxième gamme de longueurs d'ondes, par exemple en germanium ou en silicium, et dispose avantageusement d'un filtre optique 14, réalisé par exemple sous la forme d'un filtre de Bragg qui permet de sélectionner la deuxième gamme de longueurs d'ondes, correspondant préférentiellement au domaine du spectre infrarouge compris entre environ 8 µm et 15 µm, cette gamme comportant les longueurs d'ondes correspondant à la signature spectrale des objets à température ambiante transmise dans l'atmosphère. Cette gamme spectrale est donc particulièrement bien adaptée à la détection de l'activité des personnes destinée à être réalisée par la matrice de détecteurs infrarouges 112.

En alternative au filtre de Bragg, le filtre optique 14 peut correspondre à une couche antireflet, de réalisation plus simple qu'un filtre de Bragg, notamment pour des applications où le champ d'observation ne comporte pas de source infrarouge intense (comme par exemple le soleil), par exemple à l'intérieur des bâtiments. Le traitement optique de la fenêtre 113, c'est-à-dire le filtre de Bragg ou la couche antireflet, peut avantageusement être réalisé sur les deux faces de la fenêtre 113, c'est-à-dire à l'intérieur et à l'extérieur du boîtier 118. Sur chacune des deux faces principales de la fenêtre 113, il est donc possible de réaliser un filtre de Bragg ou une couche antireflet (soit un filtre de Bragg de chaque côté de la fenêtre 113, ou une couche antireflet de chaque côté de la fenêtre 13, ou encore un filtre de Bragg d'un côté et une couche antireflet de l'autre).

La fenêtre 115 qui est disposée en regard du capteur infrarouge 114 a pour fonction de filtrer et de transmettre vers le capteur infrarouge 114 les longueurs d'ondes de la première gamme de longueurs d'ondes infrarouge utilisées pour mesurer la ou les concentrations de gaz souhaitées. Elle peut être réalisée à partir d'un matériau transparent à l'infrarouge tel que du silicium, du germanium, du sulfure de zinc, du séléniure de zinc, etc., qui sont des matériaux adaptés pour couvrir un spectre infrarouge étendu (c'est-à-dire un spectre comportant une limite basse par exemple comprise entre environ 0,55 µm et 1,8 µm, et une limite haute par exemple comprise entre environ 12 µm et 23 µm, par exemple égale à environ 15 µm). Le matériau de la fenêtre 115 est choisi pour être transparent à au moins la première gamme de longueurs d'ondes. Si la fonction de détection de gaz vise un pic d'absorption situé dans une gamme de longueurs d'ondes plus restreinte (cas par exemple de la détection du CO₂ à environ 4,26 µm ou du CO à environ 4,61 µm), le choix du matériau de la fenêtre 115 peut être étendu à d'autres matériaux comme l'oxyde d'aluminium (Al₂O₃, transparent pour des longueurs d'onde inférieures ou égales à environ 5,5 µm), le fluorure de magnésium (MgF₂, transparent pour des longueurs d'onde inférieures ou égales à environ 7,5 µm) ou encore à des polymères transparents à l'infrarouge (PEHD, polyéthylène haute densité), ces matériaux alternatifs pouvant être privilégiés par exemple pour des questions de coût, de robustesse ou de facilité de fabrication et/ou d'intégration. De manière avantageuse, la fenêtre 115 dispose en outre d'un filtre passe-bande étroit 16 centré sur la ou les bandes d'absorption du ou des gaz destinés à être détectés par le capteur infrarouge 114. La largeur à mi-hauteur du filtre est généralement de l'ordre de 0,1 µm de manière à discriminer le ou les gaz recherchés des autres molécules qui auraient une bande d'absorption voisine. Il peut être réalisé par exemple sous la forme d'un filtre de Bragg et/ou sous la forme d'un filtre nano-structuré, et cela d'un côté et/ou de l'autre de la fenêtre 115, c'est-à-dire à l'intérieur et/ou à l'extérieur du boîtier 118.

La fenêtre 117 qui est disposée en regard de l'émetteur infrarouge 116 a pour fonction de transmettre le flux infrarouge émis par l'émetteur infrarouge 116, et plus particulièrement au moins la partie du rayonnement émis par l'émetteur infrarouge 116 dont les longueurs d'ondes correspondent à la ou aux bandes d'absorption du ou des gaz à détecter. Les mêmes matériaux que ceux déjà décrits pour la fenêtre 115 peuvent être utilisés. Une couche antireflet (visible mais non référencée sur la figure 1) déposée contre la fenêtre 117, à l'intérieur ou à l'extérieur du boîtier 118, peut être avantageuse pour limiter les réflexions de Fresnel et ainsi maximiser l'intensité du rayonnement infrarouge émis par l'émetteur infrarouge 116. Il est également possible d'avoir une couche antireflet au niveau des deux faces principales de la fenêtre 117, à l'intérieur et à l'extérieur du boîtier 118.

Dans une variante, les fenêtres 113, 115 et 117 peuvent être réalisées sous la forme d'une seule fenêtre disposée en regard des trois éléments 112, 114 et 116 et réalisée à partir d'un matériau transparent à la première gamme de longueurs d'ondes infrarouges (destinées à être émises par l'émetteur infrarouge 116 et détectées par le capteur infrarouge 114) et à la deuxième gamme de longueurs d'ondes infrarouges (destinées à être détectées par la matrice de détecteurs infrarouges 112). Dans ce cas, les traitements optiques (filtres, couches antireflets, etc.) propres à la première et à la deuxième gammes de longueurs d'ondes peuvent être réalisés localement sur des zones de la fenêtre se trouvant en regard des éléments 112, 114 et 116 qui leur correspondent.

Dans les exemples précédemment décrits, la première gamme de longueurs d'ondes appartient à la bande des longueurs d'ondes infrarouges moyennes (appelées MWIR et comprises entre environ 3 µm et 8 µm) et la deuxième gamme de longueurs d'ondes appartient à la bande des longueurs d'ondes infrarouges longues (appelées LWIR et comprises entre environ 8 µm et 15 µm). Il est également possible que la première et/ou la deuxième gammes de longueurs d'ondes appartiennent à la bande des longueurs d'ondes infrarouges courtes (appelées SWIR et comprises entre environ 1,4 µm et 3 µm).

Dans une autre variante, la première et la deuxième gammes de longueurs d'ondes peuvent être voisines l'une de l'autre et/ou appartenir à la même bande de longueurs d'ondes infrarouges, c'est-à-dire longues ou moyennes ou courtes comme précédemment décrit. Les longueurs d'ondes appartenant à l'une de ces trois bandes de longueurs d'ondes infrarouges présentent des similitudes en termes de propriétés optiques. Dans ce cas, la réalisation des fenêtres 113, 115 et 117 peut alors être simplifiée en utilisant d'une part un même matériau pour réaliser ces fenêtres, et d'autre part les mêmes procédés de fabrication pour réaliser les traitements optiques (filtres), au moins pour les fenêtres 113 et 117.

Selon une variante de réalisation, le dispositif de détection de gaz 11 peut comporter plusieurs capteurs infrarouges 114 et ainsi détecter et mesurer indépendamment plusieurs gaz différents. Chacun des capteurs infrarouges 114 peut alors être associé à une fenêtre 115 distincte des fenêtres associées aux autres capteurs infrarouges 114, disposant ainsi chacun d'un filtre dont la bande passante est adaptée au gaz à détecter par ledit capteur infrarouge. Dans cette variante, le dispositif de détection de gaz 11 peut comporter un seul émetteur infrarouge 116 si son spectre d'émission est suffisamment large pour couvrir l'ensemble des bandes d'absorption des gaz à détecter, comme par exemple lorsque l'émetteur infrarouge 116 est de type corps noir et correspond par exemple à un filament incandescent ou un film mince résistif, et si les bandes d'absorption des différents gaz sont situées dans la même bande infrarouge, MWIR par exemple. Il est également possible que le dispositif de détection de gaz 11 comporte plusieurs émetteurs infrarouges 116 pour couvrir l'ensemble des bandes d'absorption des gaz à détecter.

De manière avantageuse, au moins une partie des éléments 112, 114 et 116 peuvent fonctionner sous pression atmosphérique réduite, notamment lorsque ces éléments sont réalisés à partir de composants thermiques (par exemple dans le cas d'émetteurs infrarouges 116 réalisés sous la forme d'une ou plusieurs couches minces résistives, et d'une matrice de détecteurs infrarouges 112 et/ou de capteur infrarouge 114 de type pyroélectrique, thermoélectrique ou micro-bolomètre). Une telle pression atmosphérique réduite peut être obtenue au moment de la fermeture hermétique du boîtier 118 en réalisant cette opération sous vide selon des procédés tels que par exemple par pincement d'un queusot ou par assemblage sous vide du corps et du capot du boitier 118 par refonte d'une préforme de soudure. Un autre moyen d'obtenir un fonctionnement sous vide des éléments 112, 114 et 116 est de prévoir leur intégration dans une ou plusieurs cavités hermétiques disposées directement sur le circuit électronique 110, ce qui permet de maintenir une faible pression autour des composants thermiques des éléments 112, 114 et 116. Des exemples de telles cavités hermétiques intégrées directement sur un circuit sont par exemple décrits dans les documents US 2002/0175284 A1 et WO 95/17014. Les cavités sous faible pression peuvent ainsi être obtenues par le dépôt de couches minces sur une couche de matériau sacrificiel structurée par micro-usinage de surface. Ces cavités sous faible pression peuvent également être obtenues par scellement de deux substrats selon différentes méthodes possibles telles que le scellement anodique, la soudure par thermo-compression ou encore la refonte d'un cordon métallique. Les éléments (couches minces ou substrats) utilisés pour fermer les cavités peuvent servir de support pour positionner les filtres et/ou les traitements antireflet des fenêtres 113, 115 et 117.

Dans le dispositif de détection infrarouge 10, une seule et même technologie est mise en oeuvre pour fabriquer à la fois le dispositif de détection de gaz 11, c'est-à-dire le ou les émetteurs infrarouges 116 et le ou les capteurs infrarouges 114, et la matrice de détecteurs infrarouges 112.

De plus, outre les fonctions habituelles de commande et de lecture des éléments 112, 114 et 116, le circuit électronique 110 est aussi conçu pour superviser les informations issues de ces différents éléments et pour traiter les interactions entre les fonctions de détection d'activité et de détection de gaz. Cette capacité de supervision peut être mise à profit par exemple pour satisfaire des besoins d'automatisme en facilitant une prise de décision fiable grâce à la fusion des informations délivrées par la matrice de détecteurs infrarouges 112 et par le capteur infrarouge 114. La possibilité de commander de manière centralisée deux types de détecteurs et traiter des informations complémentaires peut aussi être mise à profit pour économiser l'énergie consommée par le dispositif de détection infrarouge 10 qui pourra procéder à des requêtes ciblées, soit de détection d'activité, soit de détection de gaz, selon le scenario applicatif envisagé et selon le contexte du moment.

Des connexions électriques 111 du boîtier 118 sont reliées électriquement à la carte électronique 13 et aux entrées et sorties du circuit électronique 110 par exemple par soudures filaires. La carte électronique 13 comporte en outre des composants électroniques additionnels 131, réalisés sous la forme de composants discrets et de circuits intégrés, utilisés pour piloter le circuit électronique 110 (bloc d'alimentation, horloge, etc.) et/ou pour traiter et transmettre les signaux délivrés par le circuit électronique 110 (alarme, contrôle commande, liaison RF, Internet, etc.) vers un dispositif extérieur, par exemple un système d'aération, d'éclairage, de chauffage, etc. Avantageusement, la carte électronique 13 comporte aussi un détecteur de lumière visible 132, par exemple réalisé sous la forme d'une photodiode en silicium et utilisé en tant que capteur pour l'asservissement automatique de l'éclairage en complément de la fonction de détection des personnes remplie par la matrice de détecteurs infrarouges 112. Il est également avantageux de prévoir sur la carte électronique 13 un capteur de température 133, par exemple réalisé sous la forme d'un circuit intégré, utilisé en tant que capteur de la température de l'air, en complément de l'information sur la température des objets (mur d'une pièce par exemple) pouvant être mesurée par la matrice de détecteurs infrarouges 112.

Sur l'exemple de la figure 1, la carte électronique 13 supporte aussi un boîtier optique 12, comportant ici deux parties. Une première partie, localisée sensiblement au-dessus de la matrice de détecteurs infrarouges 112 et de la fenêtre 113, supporte un système optique de focalisation qui a pour fonction de projeter l'image d'une scène sur un plan focal confondu avec le plan de la matrice de détecteurs infrarouges 112, à travers la fenêtre 113. Le système optique de focalisation comporte par exemple une lentille convergente 122 associée à un diaphragme 123 ouvert dans un corps 121 du boîtier optique 12. Une deuxième partie du boîtier optique 12, localisée sensiblement au-dessus du capteur infrarouge 114 et de l'émetteur infrarouge 116, forme une chambre d'analyse 125 d'un mélange gazeux.

Dans cette chambre d'analyse 125, un concentrateur de rayons 124 est disposé au-dessus de la fenêtre 117 et en regard d'un miroir 126 également disposé dans la chambre d'analyse 125. L'association de l'émetteur infrarouge 116, de la fenêtre 117, du concentrateur 124, de la chambre d'analyse 125, du miroir 126, du capteur infrarouge 114 associé à un filtre interférentiel étroit 16 localisé sur la fenêtre 115, forme un dispositif NDIR apte à analyser la concentration d'au moins une espèce d'un mélange gazeux qui est introduit dans la chambre d'analyse 125 par des ouvertures 127 formées à travers le corps 121 du boîtier 12. Les ouvertures 127 permettent le renouvellement du mélange gazeux se trouvant dans la chambre 125 par diffusion des espèces chimiques. Un système de pompe, par exemple activé périodiquement, peut éventuellement être prévu pour accélérer le renouvellement des espèces dans la chambre d'analyse 125, au prix toutefois d'un coût et d'une consommation électrique supérieure du dispositif de détection infrarouge 10.

Le concentrateur 124 a pour fonction de produire, à partir de l'émetteur infrarouge 116, un faisceau infrarouge 128 collimaté en direction du miroir 126 qui le réfléchi alors en direction du capteur infrarouge 114. Le trajet optique du faisceau infrarouge 128 entre les fenêtres 117 et 115, à travers le mélange gazeux, est le siège de phénomènes d'absorption infrarouge qui dépendent de la nature du mélange gazeux présent dans la chambre d'analyse 125. La mesure du flux infrarouge reçu par le capteur infrarouge 114 après atténuation à travers le ou les gaz à détecter permet d'estimer la concentration d'au moins un constituant du mélange dont le pic d'absorption correspond à la bande passante du filtre de la fenêtre 115. D'autres options de conception, par exemple des architectures à réflexions multiples, peuvent être prévues pour augmenter la longueur du trajet optique et améliorer la résolution de l'analyse. Il est également possible de prévoir une voie optique de référence comportant par exemple une chambre d'analyse hermétique chargée avec un gaz de référence ou bien une chambre d'analyse secondaire, en communication avec la chambre d'analyse principale, mais caractérisée par une longueur de trajet optique sensiblement différente.

Une autre alternative est de prévoir une voie optique de référence utilisant un filtre optique situé en dehors des bandes d'absorption des gaz que le système est susceptible de rencontrer,

Avantageusement, le dispositif de détection infrarouge 10 peut comporter un écran optique 119b disposé entre l'émetteur infrarouge 116 et le capteur infrarouge 114 et permettant d'isoler le capteur infrarouge 114 de l'éclairage direct de l'émetteur infrarouge 116 (c'est-à-dire sans passer par la chambre d'analyse 125). De même, l'isolation optique entre la partie du dispositif de détection infrarouge 10 chargée de la détection d'activité et celle en charge de la détection de gaz peut être améliorée par des écrans optiques 119a et 129a formés entre les éléments destinés à remplir ces deux fonctions. Ces écrans optiques sont par exemple réalisés sous la forme de pans internes au boîtier 118 et au boîtier optique 12. Ils sont éventuellement rapportés ou prévus dès l'usinage (ou le moulage) desdits boîtiers.

Le dispositif de détection infrarouge 10 peut aussi prévoir l'intégration d'une source infrarouge additionnelle utilisée pour calibrer les détecteurs infrarouges de la matrice 112. Une telle calibration des détecteurs infrarouges de la matrice 112 est avantageuse car elle permet de remonter à la température apparente des objets présents dans une scène (température apparente des murs par exemple qui contribue au confort ressenti par les occupants). Selon cette disposition, une source infrarouge émet un flux infrarouge calibré, à travers un hublot dépoli placé sur le boîtier 118, en direction d'un miroir supporté par le boîtier optique 12 qui renvoie une image diffuse de la source, projetée uniformément sur la surface de la matrice de détecteurs infrarouges 112. La matrice de détecteurs infrarouges 112 peut donc être éclairée par deux voies distinctes : par la scène à travers l'optique de focalisation 122 et par la source calibrée. Un système électromécanique (par exemple un électroaimant actionnant un miroir mobile) peut être prévu pour sélectionner l'une ou l'autre des deux voies.

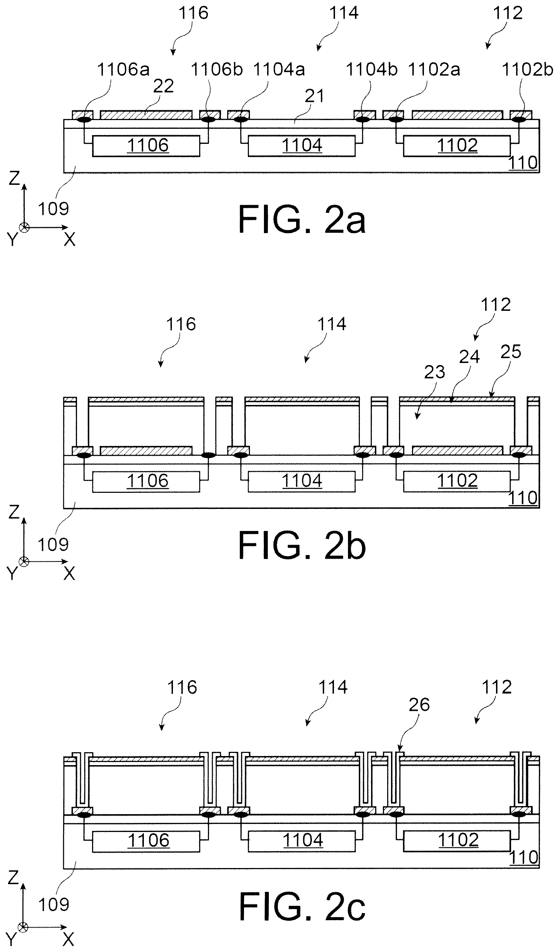

On décrit maintenant en liaison avec les figures 2a à 2f un exemple d'un procédé de réalisation de l'émetteur infrarouge 116, du capteur infrarouge 114 et de la matrice de détecteurs infrarouges 112. Ces trois éléments sont intégrés sur un seul et même substrat 109 et utilisent la même technologie de fabrication. L'unicité de technologie pour la réalisation de ces trois éléments permet d'une part de les réaliser simultanément, et d'autre part de les dupliquer un grand nombre de fois sur le substrat 109 grâce aux techniques collectives de micro-fabrication du domaine des semi-conducteurs.

Chacune des figures 2a - 2f montrent une vue en coupe de profil de l'émetteur infrarouge 116, du capteur infrarouge 114 destiné à détecter au moins un gaz absorbant par exemple dans la gamme infrarouge MWIR (typiquement du CO₂ à longueur d'onde égale à environ 4,26 µm), et d'un détecteur infrarouge formant un pixel de la matrice de détecteurs infrarouges 112 destinée à détecter une activité et fonctionnant par exemple dans la gamme infrarouge LWIR comprise entre environ 8 µm à 15 µm, réalisés via la mise en oeuvre d'étapes de dépôt de couches minces, de photolithographie, de gravure de couches minces par voie sèche ou humide, de nettoyage de résines et de résidus de gravure, de polissage mécano-chimique, etc.

La figure 2a représente le substrat 109, par exemple composé de silicium, sur lequel est intégré le circuit électronique 110 qui comporte trois blocs fonctionnels 1102, 1104, 1106, respectivement prévus pour commander et traiter les signaux délivrés par la matrice de détecteurs infrarouges 112 et par le capteur infrarouge 114, et pour commander l'émetteur infrarouge 116. Des plots de liaison électrique 1102a, 1102b, 1104a, 1104b, 1106a, 1106b sont prévus en surface du substrat 109 et sont destinés à assurer des liaisons électriques entre les blocs fonctionnels 1102, 1104, 1106 et les éléments infrarouges 112, 114, 116 correspondant. Ces plots de liaison électrique 1102a, 1102b, 1104a, 1104b, 1106a, 1106b sont réalisés à travers une couche de passivation 21, par exemple à base d'un matériau diélectrique tel que de l'oxyde de silicium ou de l'oxynitrure de silicium, réalisée sur le substrat 109, dont la fonction est d'isoler et de protéger les éléments actifs du circuit électronique 110.

Une couche de matériau métallique réflecteur 22, par exemple formée d'un empilement d'une couche de titane et d'une couche d'aluminium, est déposée sur la couche de passivation 21 puis structurée par photolithographie et gravure de manière à conserver une ou plusieurs portions du matériau métallique réflecteur 22 sous chacun des détecteurs infrarouges de la matrice de détecteurs infrarouges 112. Une ou plusieurs autres portions du matériau métallique réflecteur 22 seront aussi préférentiellement conservées au niveau des plots de liaison électrique 1102a, 1102b, 1104a, 1104b, 1106a et 1106b pour améliorer le contact électrique entre le circuit électronique 110 et les éléments infrarouges 112, 114 et 116 qui seront reliés électriquement à ces plots de liaison électrique. Au moins une portion du matériau métallique réflecteur 22 peut également être conservée au niveau de l'émetteur infrarouge 116, comme représenté sur les figures 2a-2f. En revanche, le matériau métallique réflecteur 22 est supprimé au niveau du capteur infrarouge 114 pour des raisons d'adaptation d'impédance électromagnétique décrites plus loin.

Comme représenté sur la figure 2b, on réalise ensuite un dépôt et une planarisation d'une couche de matériau sacrificiel 23, par exemple à base de polyimide, sur la couche de passivation 21 et sur les portions restantes du matériau métallique réflecteur 22. Une première couche diélectrique 24, par exemple à base d'oxyde de silicium ou de nitrure de silicium, est ensuite déposée sur la couche de matériau sacrificiel 23, puis une couche résistive 25, ici métallique, est déposée sur la première couche diélectrique 24. La couche résistive 25 est telle que les valeurs de la résistivité du matériau utilisé et de son épaisseur sont adaptées pour optimiser l'absorption des rayonnements infrarouges destinés à être reçus par le capteur infrarouge 114 et par la matrice de détecteurs infrarouges 112. Ainsi, la couche résistive 25 est réalisée telle qu'elle présente des caractéristiques électriques particulières conduisant à une absorption optique partielle du rayonnement infrarouge (environ 50% en l'absence de cavité, pouvant être augmentée jusqu'à 100% pour une longueur d'onde choisie en présence d'une cavité, comme cela est décrit plus loin). La couche résistive 25 correspond donc à une couche semi-absorbante. La couche résistive 25 peut comporter du nitrure de titane (TiN) ou d'autres matériaux tels que du siliciure de molybdène (MoSi₂) ou du siliciure de tungstène (WSi₂). L'épaisseur de la couche de matériau sacrificiel 23 est par exemple égale à environ 2,5 µm, et est choisie en fonction d'une distance souhaitée entre le substrat 109 et la couche résistive 25. Le matériau de la couche sacrificielle 23 est choisi tel qu'il puisse être gravé sélectivement par rapport aux matériaux en présence (couche de passivation 21, matériau métallique réflecteur 22, matériau de la première couche diélectrique 24, etc.).

Les trois couches 23, 24 et 25 sont gravées localement au droit, ou en regard, des plots de liaison électrique 1102a, 1102b, 1104a, 1104b, 1106a, 1106b, en utilisant éventuellement la couche résistive 25 comme masque dur, ou tout autre matériau pouvant faire office de masque dur et qui serait ensuite supprimé, formant ainsi des trous et/ou des tranchées permettant d'accéder aux portions du matériau métallique réflecteur 22 recouvrant les plots de liaison électrique 1102a, 1102b, 1104a, 1104b, 1106a, 1106b.

On réalise ensuite le dépôt d'au moins une couche de matériau électriquement conducteur, par exemple métallique, sur la couche résistive 25 et dans les trous et/ou les tranchées formant les accès aux plots de liaison électrique 1102a, 1102b, 1104a, 1104b, 1106a, 1106b à travers les couches 23, 24 et 25 pour assurer la continuité électrique et mécanique entre les plots de liaison électrique 1102a, 1102b, 1104a, 1104b, 1106a, 1106b (via les portions du matériau métallique réflecteur 22 recouvrant ces plots) et les portions de la couche résistive 25 de chacun des éléments infrarouge 112, 114 et 116 (figure 2c). Cette couche est par exemple à base d'aluminium et/ou de titane et/ou de siliciure de tungstène (WSi). La couche est ensuite définie (par exemple par photolithographie) et gravée de façon à limiter son encombrement sur la couche résistive 25 à la seule surface nécessaire à une bonne reprise de contact électrique avec les portions de la couche résistive 25. Les portions restantes de cette couche forment des portions de matériau électriquement conducteur 26 destinées à relier électriquement les portions de la couche résistive 25 au circuit électronique 110 et à assurer un maintien mécanique de ces portions (et d'autres matériaux) lorsque la couche de matériau sacrificiel 23 sera gravée ultérieurement.

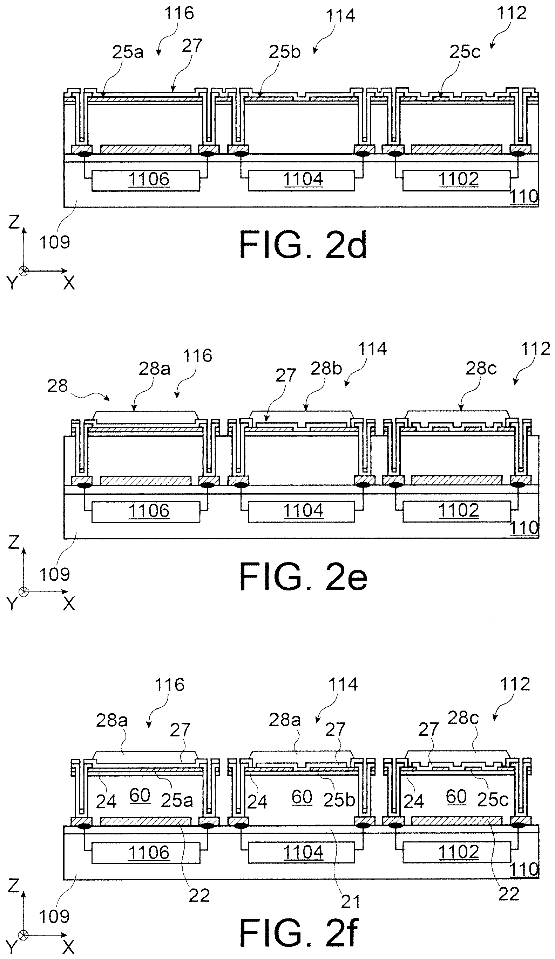

Comme représenté sur la figure 2d, on définit ensuite des plages, ou portions, de métal destinées à réaliser une émission ou une réception de rayons infrarouges, pour l'émetteur infrarouge 116, le capteur infrarouge 114 et la matrice de détecteurs infrarouges 112, par photolithographie et gravure de la couche résistive 25 selon une configuration, ou motif, adaptée aux caractéristiques électriques et aux caractéristiques d'absorption ou d'émission infrarouge souhaitées pour les trois dispositifs infrarouges 116, 114 et 112. Cette gravure forme ainsi au moins :
- une première portion 25a de la couche résistive 25, faisant partie de l'émetteur infrarouge 116 et destinée à réaliser une émission d'un premier rayonnement infrarouge dans la première gamme de longueurs d'ondes aptes à être absorbées par le ou les gaz à détecter par le dispositif de détection de gaz 11 ;
- une deuxième portion 25b de la couche résistive 25, faisant partie du capteur infrarouge 114 et destinée à coopérer à la détection du premier rayonnement infrarouge après absorption par le ou les gaz à détecter par le dispositif de détection de gaz 11 ;
- pour chaque détecteur infrarouge de la matrice de détecteurs infrarouges 112, au moins une troisième portion 25c de la couche résistive 25, destinée à coopérer à la détection d'un deuxième rayonnement infrarouge dans la deuxième gamme de longueurs d'ondes destinées à être détectées par la matrice de détecteurs infrarouges 112.

Le matériau de la couche résistive 25 est tel qu'une portion (ici la portion 25a) de cette couche est apte à produire un rayonnement infrarouge lorsque cette portion est traversée par un courant électrique, et qu'une portion (les portions 25b et 25) de cette couche est apte à produire de la chaleur lorsqu'elle reçoit un rayonnement infrarouge.

Le motif des portions 25a, 25b et 25c, c'est-à-dire la géométrie de ces portions dans le plan (X;Y), sera notamment fonction des gammes de longueurs d'ondes destinées à être émises et reçues par les éléments 112, 114 et 116, de l'impédance électromagnétique souhaitée de ces portions, de leur résistance électrique, etc. Des exemples de motifs de ces portions 25a, 25b et 25c sont détaillés plus loin.

On procède ensuite au dépôt d'une deuxième couche diélectrique 27, par exemple à base d'oxyde de silicium ou de nitrure de silicium, sur les portions restantes 25a, 25b, 25c de la couche résistive 25, sur la première couche diélectrique 24 (là où la couche résistive 25 est gravée), et sur les portions de matériau électriquement conducteur 26.

De manière avantageuse, au moins une des couches diélectriques 24 et 27 peut être réalisée de façon à ce qu'elle absorbe suffisamment le rayonnement infrarouge dans la première et/ou la deuxième gamme de longueurs d'ondes, par exemple ici à la fois dans la bande LWIR et dans la bande MWIR. Pour cela, au moins l'une de ces deux couches diélectriques 24 et 27 peut comporter du nitrure de silicium (Si₃N₄) qui présente de nombreuses bandes d'absorption dans le domaine infrarouge,

L'absorption est de plus renforcée si au moins l'une de ces couches 24 et 27 présente une épaisseur au moins égale à environ 400 nm.

Au cours de l'étape suivante représentée sur la figure 2e, on définit des ouvertures à travers la deuxième couche diélectrique 27, formant des accès électriques aux portions 25b et 25c de la couche résistive 25. On procède ensuite au dépôt d'une couche 28 à base d'un matériau sensible à la température, c'est-à-dire dont la conductivité électrique varie en fonction de sa température, par exemple dont la conductivité électrique croît exponentiellement avec la température. Cette couche 28 est par exemple à base de silicium amorphe, de silicium polycristallin, de germanium amorphe ou polycristallin, ou encore d'oxydes métalliques comme par exemple de l'oxyde de vanadium. La couche 28 peut correspondre à une couche semi-conductrice de dopage faible permettant d'obtenir une bonne transduction thermorésistive, assimilable à un diélectrique. La couche 28 est ensuite structurée par lithographie et gravure afin que des portions restantes de cette couche 28 occupent uniquement les zones centrales des éléments 112, 114 et 116, et que des zones périphériques (notamment au niveau des portions de matériau électriquement conducteur 26 et dans leur environnement proche) soient dégagées pour améliorer l'isolation thermique entre les éléments infrarouges 112, 114 et 116 et l'isolation thermique avec le substrat 109. Sur l'exemple de la figure 2e, des portions restantes 28a, 28b et 28c de la couche 28 sont présentes respectivement sur les portions 25a, 25b et 25c de la couche résistive 25. Du fait des ouvertures précédemment réalisées à travers la deuxième couche diélectrique 27, la portion 28b est couplée thermiquement à la portion 25b de la couche résistive 25. Cette portion 28b a sa résistance électrique qui est destinée à varier en fonction de la variation de température de la portion 25b engendrée par le rayonnement infrarouge détecté par le capteur infrarouge 114. Cette variation de la résistance électrique de la portion 28b pourra être détectée du fait que cette portion 28b est reliée électriquement au circuit 110 par les portions de matériau électriquement conducteur 26, ici via la portion 25b de la couche résistive 25. La portion 28c est couplée thermiquement à la portion 25c de la couche résistive 25. Ici, la portion 28c est également couplée électriquement, à travers les ouvertures formées au préalable dans la deuxième couche diélectrique 27, à la portion 25c, ce qui forme la liaison électrique entre la portion 28c et le circuit 110 via les portions de matériau électriquement conducteur 26. Cette portion 28c a sa résistance électrique qui est destinée à varier en fonction de la variation de température de la portion 25c liée au rayonnement infrarouge détecté par le détecteur infrarouge associé. Les portions 28b et 28c du matériau sensible à la température sont destinées à former un transducteur thermorésistif respectivement du capteur infrarouge 114 et du détecteur infrarouge de la matrice 112, les portions de la couche résistive 25 assurant l'absorption du rayonnement infrarouge reçu. Sur l'exemple de la figure 2e, une portion 28a de la couche 28 est également conservée au-dessus de la portion 25a de la couche résistive 25 de l'émetteur infrarouge 116. Les portions de la couche 28 sont aptes à être traversées par les rayonnements infrarouges émis et reçus par les éléments 112, 114 et 116.

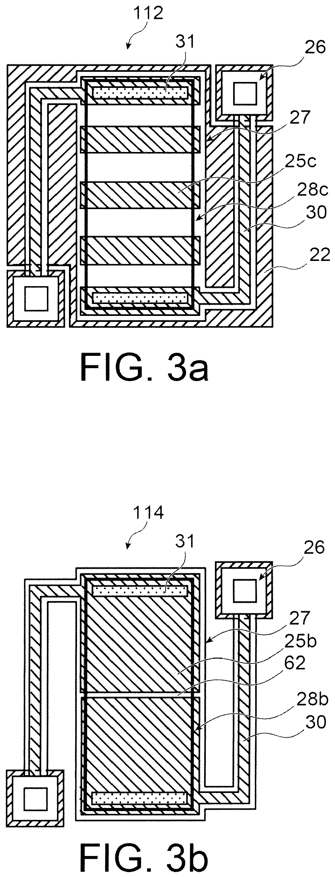

Un dernier niveau photo-lithographique est défini afin d'isoler électriquement et thermiquement les dispositifs 112, 114, 116 les uns des autres par gravure des couches 27, 25, 24, et éventuellement 28. Cette gravure permet en outre de définir, dans les couches 24, 25 et 27, des portions de section réduite 30 (visibles sur les figures 3a à 3c décrites plus loin), dans le prolongement desdits dispositifs de manière à relier électriquement les portions 25a, 25b et 25c aux portions de matériau électriquement conducteur 26. Une section réduite, correspondant par exemple à une largeur comprise entre environ 0,3 µm et 10 µm, pour une épaisseur par exemple comprise entre environ 20 nm et 2 µm selon la nature des couches 27 et 24, est de préférence réalisée pour améliorer l'isolation thermique desdits dispositifs. Ces portions 30 forment des bras d'isolation thermique dont la longueur est par exemple comprise entre environ 2 µm et 90 µm lorsqu'il s'agit de portions 30 en forme de poutres.

Comme représenté sur la figure 2f, la couche de matériau sacrificiel 23 est éliminée, par exemple par gravure chimique dans un plasma oxygène lorsque la couche de matériau sacrificiel 23 est à base de polyimide. On obtient ainsi les trois dispositifs infrarouges 112, 114 et 116 réalisés sous la forme de micro-ponts suspendus, intégrés sur un même substrat, mais chacun réalisé de telle manière que ses propriétés électriques et électro-optiques soient adaptées à une fonction particulière d'émission ou de détection infrarouge. L'architecture en micro-ponts suspendus des trois dispositifs 112, 114 et 116 est obtenue du fait que la gravure de la couche de matériau sacrificiel 23 forme des cavités, ou lames d'air, 60 entre la première couche diélectrique 24 et la couche de passivation 21. L'architecture en micro-ponts suspendus dont bénéficient les trois dispositifs 112, 114 et 116 est avantageuse car elle forme une isolation thermique efficace des dispositifs 112, 114 et 116 vis-à-vis du substrat 109, ce qui permet d'améliorer la sensibilité de la matrice de détecteurs infrarouges 112 et du capteur infrarouge 114 d'une part et le rendement énergétique de l'émetteur infrarouge 116 d'autre part.

Chaque détecteur infrarouge de la matrice de détecteurs infrarouges 112 est formé, de bas en haut en partant de la surface passivée du circuit (couche de passivation 21), d'un film métallique réflecteur formé par la portion de matériau métallique réflecteur 22, d'une lame d'air ou cavité 60 (correspondant à l'espace libéré par la gravure de la couche de matériau sacrificiel 23) d'épaisseur égale à environ 2,5 µm, d'un empilement de couches comprenant au moins un film résistif formé par la portion 25c, les couches diélectriques 24, 27 qui sont essentiellement transparentes aux longueurs d'ondes infrarouges destinées à être détectées, et l'élément transducteur thermorésistif formé par la portion 28c de matériau sensible à la température. Dans la matrice de détecteurs infrarouges 112, la portion résistive 25c est fragmentée. Ainsi, la portion de matériau métallique réflecteur 22, la lame d'air 60 et la portion 25c fragmentée forment une cavité interférentielle quart d'onde qui présente ici un pic de résonnance pour une longueur d'onde λ₁ destinée à être détectée par la matrice de détecteurs infrarouges 112, par exemple égale à environ 10 µm, et qui est donc bien adaptée pour réaliser une détection d'activité de personnes.

Selon les lois de Maxwell, cette cavité 60 peut être prévue pour obtenir une absorption voisine de 100% pour des longueurs d'ondes égale à environ 10 µm si le rapport (p/e) de la résistivité sur l'épaisseur de la portion 25c de la couche résistive 25 est voisin de 120.π, soit environ 377 Ω, comme décrit dans le document US 5 021 663. Cette impédance électromagnétique, ou résistance de couche, de 377 Ω peut être obtenue à partir d'une couche résistive 25 à base de nitrure de titane (TiN) déposée par pulvérisation cathodique réactive, de résistivité égale à environ 150 µΩ.cm, d'épaisseur égale à environ 8 nm et dont la portion 25c est fragmentée de telle manière que son taux de remplissage (surface occupée par le métal de la portion 25c par rapport à la surface totale de détection du détecteur infrarouge) soit de 50% environ, pour obtenir une résistivité apparente de 300 µΩ.cm. Le document US 5 912 464 décrit en outre qu'une fragmentation d'un film résistif, tel que la couche résistive 25, répond à des règles de dessin telles que le motif des éléments fragmentés est répété suivant un pas compris typiquement entre λ₁ et 0,5.λ₁ pour obtenir une absorption moyenne supérieure à environ 90 %. La portion 25c peut dans ce cas être formée de bandes de matériau résistif de largeur égale à environ 2,5 µm espacées d'environ 2,5 µm jusqu'à des bandes de largeur égale à environ 4 µm espacées d'environ 4 µm, par exemple pour détecter un rayonnement infrarouge de longueur d'onde comprise entre environ 8 µm et 12 µm.

La figure 3a montre à titre d'exemple une vue de dessus d'un détecteur infrarouge formant un pixel de la matrice de détecteurs infrarouges 112 réalisé comme précédemment décrit. L'absorption de l'onde infrarouge par couplage résistif des électrons de la portion 25c se traduit par une élévation de température qui se propage, par couplage thermique, à travers la deuxième couche diélectrique 27 jusqu'à la portion 28c de matériau sensible à la température. La couche 28 peut être réalisée en silicium amorphe dont on sait ajuster le couple résistivité - coefficient de température sur une large gamme de valeurs. Un coefficient de température compris entre environ -2%.K⁻¹ et -4%.K⁻¹ peut être par exemple obtenu par un dopage adéquat du silicium amorphe de la couche 28. Par l'intermédiaire d'ouvertures 31 réalisées à travers la deuxième couche diélectrique 27 lors de l'étape précédemment décrite en liaison avec la figure 2e, la portion 28c (représentée en transparence sur la figure 3a) est reliée électriquement à au moins deux des éléments fragmentés de métal de la portion 25c qui sont reliées électriquement aux portions de matériau électriquement conducteur 26 via les portions électriquement conductrices 30 de section réduite, ce qui permet au bloc fonctionnel 1102 de mesurer la résistance électrique présentée par le transducteur thermorésistif formé par la portion 28c. Les éléments fragmentés de la portion 25c sont par exemple chacun de forme sensiblement rectangulaire et sont alignés les uns à côté des autres. D'autres types d'éléments fragmentés peuvent être réalisés, comme décrit par exemple dans le document US 5 912 464. Les pixels de la matrice de détecteurs infrarouges 112 comprenant chacun un transducteur thermique, la sensibilité de la matrice de détecteurs infrarouges 112 est donc améliorée du fait de la structure suspendue de ces détecteurs qui sont donc isolés thermiquement du substrat 109. L'isolation thermique est en outre augmentée du fait que la structure suspendue du détecteur infrarouge est reliée aux portions de matériau électriquement conducteur 26, par des portions 30 de la couche résistive 25 de section réduite. De plus, l'isolation thermique peut encore être renforcée en faisant fonctionner la matrice de détecteurs infrarouges 112 sous vide.

Le capteur infrarouge 114 est essentiellement formé de la portion 25b de la couche résistive 25, entourée des couches diélectriques 24, 27 et de la portion 28b formant le transducteur thermorésistif, le tout suspendu dans un milieu purement diélectrique. Le capteur infrarouge 114 ne comporte pas de matériau métallique réflecteur disposé sur la couche de passivation 21. Au sein du capteur infrarouge 114, la portion 25b la couche résistive 25 est essentiellement continue, en dehors d'une découpe unique 62 réalisée à l'étape de gravure précédemment décrite en liaison avec la figure 2d et dont la largeur (correspondant à la dimension séparant les deux parties de la portion 25b) est petite devant une longueur d'onde λ₂ destinée à être détectée par le capteur infrarouge 114 et qui est par exemple égale à environ 4,26 µm lorsque le capteur infrarouge 114 est destiné à réaliser une détection de CO₂.

Comme représenté sur la figure 3b (qui représente une vue de dessus du capteur infrarouge 114), la découpe 62 divise la portion 25b en deux éléments de forme sensiblement rectangulaire ou carré. Selon les lois de Maxwell, l'absorption d'un film résistif continu séparant deux demi-espaces diélectriques infinis est égale à environ 50 % quelle que soit la longueur d'onde absorbée, si le rapport (p/e) de la résistivité sur l'épaisseur du film résistif est voisin d'environ 60.π, soit 188 Ω et dans l'hypothèse où l'indice de réfraction et le coefficient d'extinction du film résistif sont égaux, ce qui est généralement le cas dans le domaine des longueurs d'ondes infrarouges. Dans le capteur infrarouge 114, un premier demi-espace supérieur (se trouvant au-dessus de la portion 25b) est formé des deux couches 27, 28 et de l'espace d'où provient le rayonnement infrarouge, et un deuxième demi-espace inférieur (se trouvant au-dessous de la portion 25b) est formé de la couche 24, de la cavité 60, de la couche 21 et du substrat 109 dans lequel des lignes de métal ne sont de préférence pas intégrées.

Cette impédance électromagnétique de 188 Ω peut être obtenue à partir de la même couche résistive 25 que celle servant à former la portion 25c (par exemple composée de nitrure de titane, de résistivité égale à environ 150 µΩ.cm, d'épaisseur égale à environ 8 nm), mais en formant la portion 25b avec un taux de remplissage voisin de 100%. Les mêmes dispositions que celles déjà décrites pour la matrice de détecteurs infrarouges 112 peuvent être adoptées pour coupler le transducteur thermorésistif 28b du capteur infrarouge 114 et pour le relier au bloc fonctionnel de mesure 1104. Les bénéfices apportés par une construction suspendue et par un fonctionnement sous vide précédemment décrits pour la matrice de détecteurs infrarouges 112 se retrouvent pour le capteur infrarouge 114.

L'émetteur infrarouge 116 est essentiellement formé, de bas en haut en partant de la couche de passivation 21, d'un film métallique réflecteur formé par la portion de matériau métallique réflecteur 22 (optionnel), d'une lame d'air, ou cavité, 60 de hauteur par exemple égale à environ 2,5 µm, d'un empilement de couches comprenant au moins la portion 25a de la couche résistive 25 entouré des couches diélectriques 24, 27 et recouvert de la portion 28a de matériau sensible à la température. Les couches diélectriques 24 et 27 servent respectivement de support mécanique et de couche de protection à la portion 25a de la couche résistive 25 qui est l'élément actif de l'émetteur infrarouge 116. Lors d'une émission d'un rayonnement infrarouge par l'émetteur infrarouge 116, la portion 25a est chauffée par dissipation d'un courant électrique généré par le circuit électronique 10 (bloc fonctionnel 1106) et dont le contrôle permet de régler à la fois la température atteinte par la portion 25a et la puissance radiative qu'elle émet. La configuration suspendue prévue pour réaliser l'émetteur infrarouge 116 permet en outre d'améliorer son rendement énergétique (rapport de la puissance radiative émise sur la puissance Joule dissipée). En effet, une configuration suspendue alliée à un fonctionnement sous vide de l'émetteur infrarouge 116 permet de l'isoler thermiquement du substrat 109 avec une impédance thermique de quelques 1.10⁶ K.W⁻¹. Dans ces conditions, une dissipation Joule d'environ 400 µW suffit pour établir une élévation de température de 400°C entre la source infrarouge formée par l'émetteur infrarouge 116 et le substrat 109 dont la température est généralement proche de la température ambiante. Cette source infrarouge atteint ainsi une température de l'ordre de 700 K qui, selon la loi de Wien, correspond à un pic d'émission corps noir à environ 4,3 µm, en cohérence avec la bande d'absorption du CO₂. Une dissipation Joule de 400 µW peut être obtenue à partir de la même couche résistive 25 par exemple composée de nitrure de titane (résistive d'environ 150 µΩ.cm, épaisseur d'environ 8 nm) que celle utilisée pour réaliser le détecteur infrarouge de la matrice 112 et le capteur infrarouge 114. Par exemple, à l'étape de gravure de la couche résistive 25 représentée sur la figure 2d, il est possible de graver la portion 25a sous la forme d'un carré pour obtenir une résistance électrique de 188 Ω. Une telle résistance permet de dissiper environ 400 µW sous une tension de polarisation d'environ 0,28 V avec un courant d'environ 1,45 mA.

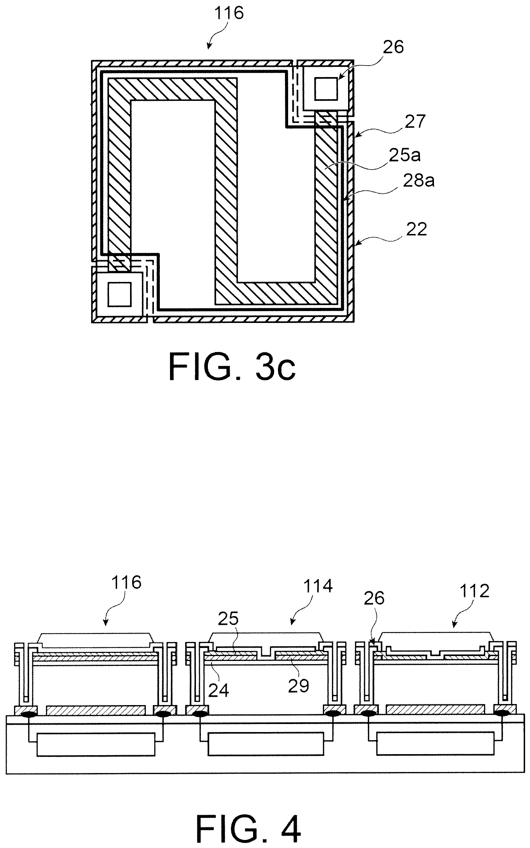

La portion 25a de la couche résistive 25 de l'émetteur infrarouge 116 peut également être réalisée sous la forme d'un rectangle ou d'un serpentin (comme représenté sur la figure 3c) qui permet d'atteindre une puissance d'environ 400 µW mais avec une résistance sensiblement plus élevée, donc mieux adaptée à l'impédance de sortie du bloc fonctionnel 1106 du circuit électronique 110 qui forme le circuit de commande de l'émetteur infrarouge 116. Par exemple, le serpentin représenté sur la figure 3c considéré comme formé d'environ 35 carrés de TiN reliés en série le long du motif du serpentin dissipe environ 400 µW sous environ 1,6V avec un courant d'environ 250 µA. L'adaptation d'impédance entre la portion 25a de la couche résistive 25 et le circuit de commande 1106 permet d'améliorer le rendement énergétique de l'émetteur infrarouge 116. La présence de la portion 28a de matériau sensible à la température est optionnelle et peut être éliminée par exemple lors de la gravure précédemment décrite en liaison avec la figure 2e. Cette portion 28a de matériau sensible à la température permet toutefois de consolider mécaniquement les couches 24, 25, 27 qui sont généralement prévues fines, notamment pour des raisons d'isolation thermique des détecteurs infrarouges de la matrice 112 et du capteur infrarouge 114, et qui pourraient se déformer sous l'effet des contraintes de dilatation thermique introduites par leur échauffement. Un autre avantage à conserver la portion 28a de matériau sensible à la température au-dessus de la portion 25a de la couche résistive 25 est qu'elle contribue aussi à l'émission du flux infrarouge de l'émetteur infrarouge 116.

La couche 28 est par exemple à base d'un semi-conducteur tel que du silicium amorphe, dont la conductivité électrique croît exponentiellement avec la température. L'activation de l'émetteur infrarouge 116 à une température voisine de 400°C modifie donc fondamentalement les propriétés optiques de la portion 28a, passant d'essentiellement transparente à température ambiante à fortement absorbante à haute température où les propriétés d'absorption optique des semi-conducteurs sont dictées par la densité élevée des porteurs libres. Dans ces conditions de forte absorption optique, les propriétés d'émission infrarouge de la portion 28a s'apparentent à celles d'un corps noir qui permet de couvrir efficacement la gamme spectrale MWIR, et en particulier les bandes d'absorption des principaux gaz susceptibles d'être détectés par le dispositif de détection de gaz 11 (CO₂, CO, etc.).

Une partie de l'énergie radiative délivrée par l'émetteur infrarouge 116 est émise en direction du substrat 109. Il est donc avantageux de conserver une portion de matériau métallique réflecteur 22 sous la portion 25a de l'émetteur infrarouge 116 pour renvoyer cette énergie vers le haut en direction de l'enceinte 125 où se trouvent le ou les gaz à détecter, améliorant ainsi le rendement énergétique de l'émetteur infrarouge 116. Cela permet aussi de protéger le circuit électronique 110 du rayonnement infrarouge émis par l'émetteur infrarouge 116 et donc d'éviter un échauffement excessif qui nuirait à un fonctionnement stable du circuit électronique 110.

Selon une variante du procédé de réalisation précédemment décrit, il est possible que la géométrie, dans le plan (X;Y), de la portion 25b et/ou de la portion 25c soit essentiellement continu tel que représenté sur la figure 3b. Dans ce cas, c'est la construction dans la direction z des détecteurs infrarouges de la matrice 112 et du capteur infrarouge 114 qui est adaptée individuellement pour obtenir l'absorption infrarouge souhaitée pour les détecteurs infrarouges de la matrice 112 et du capteur infrarouge 114, respectivement dans la bande LWIR et dans la bande MWIR, comme décrit ci-dessous.

Selon cette variante, il est possible de prévoir la même géométrie, dans le plan (X;Y), des portions 25c et 25b de la matrice de détecteurs infrarouges 112 et du capteur infrarouge 114 de façon à obtenir les impédances électromagnétiques visées pour ces éléments infrarouges, respectivement 377 Ω et 188 Ω. Pour cela, préalablement au dépôt de la couche résistive 25 sur la première couche diélectrique 24, une deuxième couche résistive 29, par exemple métallique ou à base de semi-conducteur dopé, est déposée au préalable sur la couche diélectrique 24, la couche résistive 25 étant déposée ensuite sur cette deuxième couche résistive 29. Au niveau de la matrice de détecteurs infrarouges 112, la deuxième couche résistive 29 est éliminée, par exemple par photolithographie et gravure, préalablement au dépôt de la couche résistive 25, sauf au niveau des contacts électriques formés par les portions de matériau électriquement conducteur 26 afin de garantir un bon contact électrique. Les couches résistives 25 et 29, composées de TiN et de résistivité égale à environ 150 µΩ.cm, sont prévues en épaisseur plus fine, par exemple égale à environ 4 nm. La suite du procédé est inchangée en veillant toutefois, au moment de la gravure de la couche résistive 25, à graver à la fois la couche résistive 25 et la deuxième couche résistive 29 pour le capteur infrarouge 114 et l'émetteur infrarouge 116 (figure 4).

Comme cela est visible sur les figures 2c à 2f et 4, les portions de matériau électriquement conducteur 26 s'étendent entre les portions 25a, 25b et 25c de la couche résistive 25 et le substrat 109, et forment des piliers soutenant mécaniquement les portions 25a, 25b et 25c de la couche résistive 25. Le maintien mécanique des portions 25a, 25b et 25c de la couche résistive 25 au-dessus du substrat 109 peut n'être assuré que par les portions de matériau électriquement conducteur 26.

Selon une autre variante de réalisation, il est possible d'ajouter sur la surface de la couche 28 de matériau sensible à la température, une couche supplémentaire présentant des propriétés d'absorption dans les premières et deuxièmes gammes infrarouges, par exemple LWIR et MWIR. Une telle couche est par exemple réalisée à base de nanotubes de carbone ou composée d'autres matériaux tels que du noir de carbone ou de l'or noir (matériau à base d'or de grande porosité).

La surface de cette couche absorbante peut être en outre recouverte par une fine couche de protection, par exemple composée de SiO₂ et d'épaisseur égale à environ 10 nm.

Selon une autre variante de réalisation, il est possible de graver la couche de matériau métallique réflecteur 22 et la couche résistive 25 selon un même motif, par exemple essentiellement continu, pour la matrice de détecteurs infrarouges 112 et le capteur infrarouge 114. Cette variante est bien adaptée au cas où le dispositif de détection de gaz 11 est destiné à détecter un gaz ayant une bande d'absorption infrarouge dans la gamme LWIR.

Il est également possible que le capteur infrarouge 114 forme une partie de la matrice de détecteurs infrarouges 112. Dans ce cas, le filtre interférentiel permettant la détection de gaz est déporté en dehors du trajet optique du rayonnement infrarouge porteur de l'information d'activité des personnes, c'est-à-dire en dehors du trajet optique de la matrice de détecteurs infrarouges, préférentiellement dans l'enceinte 125.

De manière générale, la résistivité de la couche résistive 25 peut être différente de 150 µΩ.cm, son épaisseur est alors ajustée en conséquence pour obtenir les impédances électromagnétiques de 377 Ω et 188 Ω souhaitées. Ceci peut être obtenu par exemple en ajustant les paramètres du procédé de dépôt du TiN élaboré par pulvérisation réactive, c'est-à-dire les paramètres de dépôt de la couche résistive 25. Il est possible d'obtenir par ce moyen une couche résistive présentant une résistivité par exemple comprise entre environ 150 µΩ.cm et 750 µΩ.cm. Une autre possibilité est de réaliser la couche résistive 25 à partir de matériaux autres que le TiN, par exemple du WSi₂ ou du MoSi₂.

## Revendications

1. Dispositif de détection infrarouge (10) comportant au moins un dispositif de détection de gaz (11, 114, 116) qui comprend au moins :
- une couche résistive (25) dont au moins une première portion (25a) est apte à réaliser une émission d'un premier rayonnement infrarouge dans une première gamme de longueurs d'ondes aptes à être absorbées par le ou les gaz à détecter, et dont au moins une deuxième portion (25b), apte à absorber ledit premier rayonnement infrarouge après absorption par le ou les gaz à détecter et à produire de la chaleur, est couplée thermiquement à au moins un premier élément (28b) de transduction thermorésistive qui est disposé sur la deuxième portion (25b) de la couche résistive (25);
- un substrat (109) comportant au moins un premier circuit électronique (110, 1104, 1106) de commande et de lecture du dispositif de détection de gaz (11, 114, 116);
- des portions de matériau électriquement conducteur (26) reliant électriquement au moins la première portion (25a) de la couche résistive (25) et le premier élément (28b) de transduction thermorésistive au premier circuit électronique (110, 1104, 1106), et assurant un maintien mécanique de la première portion (25a) et de la deuxième portion (25b) de la couche résistive (25) en regard du substrat (109) tel qu'une distance entre la première portion (25a) de la couche résistive (25) et le substrat (109) soit sensiblement égale à une distance entre la deuxième portion (25b) de la couche résistive (25) et le substrat (109) ;
le dispositif de détection infrarouge (10) comportant en outre une matrice de détecteurs infrarouges (112) apte à produire une représentation Infrarouge bidimensionnelle pour analyser ou détecter des mouvements et telle que chaque détecteur infrarouge comporte au moins :
- une troisième portion (25c) de la couche résistive (25) apte à absorber un deuxième rayonnement infrarouge dans une deuxième gamme de longueurs d'onde destiné à être détecté et à produire de la chaleur, ladite troisième portion (25c) étant couplée thermiquement à au moins un deuxième élément (28c) de transduction thermorésistive qui est disposé sur la troisième portion (25c) de la couche résistive (25);
- des portions de matériau électriquement conducteur (26) reliant électriquement le deuxième élément (28c) de transduction thermorésistive à un deuxième circuit électronique (110, 1102) de commande et de lecture de la matrice de détecteurs infrarouges (112) réalisé dans le substrat (109), et assurant un maintien mécanique de la troisième portion (25c) de la couche résistive (25) en regard du substrat (109) tel qu'une distance entre la troisième portion (25c) de la couche résistive (25) et le substrat (109) soit sensiblement égale à la distance entre la deuxième portion (25b) de la couche résistive (25) et le substrat (109),
dans lequel les portions de matériau électriquement conducteur (26) forment des piliers soutenant mécaniquement les première, deuxième et troisième portions (25a, 25b, 25c) de la couche résistive (25).

2. Dispositif (10) selon la revendication 1, dans lequel chaque détecteur infrarouge comporte en outre au moins une portion de matériau métallique réflecteur (22) disposée entre le substrat (109) et la troisième portion (25c) de la couche résistive (25) du détecteur infrarouge, la distance entre la troisième portion (25c) de la couche résistive (25) et la portion de matériau métallique réflecteur (22), dans chacun des détecteurs infrarouges, étant égale à environ un quart d'une longueur d'onde appartenant à la deuxième gamme de longueurs d'ondes et destinée à être détectée par le détecteur infrarouge.

3. Dispositif (10) selon la revendication 2, dans lequel chacune des troisièmes portions (25c) de la couche résistive (25) comporte une impédance électromagnétique sensiblement égale au double d'une impédance électromagnétique de la deuxième portion (25b) de la couche résistive (25).

4. Dispositif (10) selon l'une des revendications 1 à 3, dans lequel la matrice de détecteurs infrarouges (112) est couplée optiquement à un système optique de focalisation (122, 123).

5. Dispositif (10) selon l'une des revendications précédentes, comportant en outre au moins une portion de matériau (28a) dont la résistivité est supérieure à cette du matériau de la couche résistive (25), disposée sur la première portion (25a) de la couche résistive (25) tel que le premier rayonnement infrarouge soit destiné à être émis à travers ladite portion de matériau (28a).

6. Dispositif (10) selon l'une des revendications précédentes, dans lequel le premier élément (28b) de transduction thermorésistive comporte une première portion de silicium amorphe et/ou le deuxième élément (28c) de transduction thermorésistive comporte une deuxième portion de silicium amorphe et/ou, lorsque le dispositif (10) comporte la portion de matériau (28a) dont la résistivité est supérieure à celle du matériau de la couche résistive (25), ladite portion de matériau (28a) est à base de silicium amorphe.

7. Dispositif (10) selon l'une des revendications précédentes, comportant en outre un boîtier (118) dans lequel sont enfermés hermétiquement le dispositif de détection de gaz (11, 114, 116) et/ou la matrice de détecteurs infrarouges (112), le boîtier (118) comportant au moins une première portion (115, 117) de matériau transparent vis-à-vis de la première gamme de longueurs d'ondes disposée en regard du dispositif de détection de gaz (11, 114, 116) et/ou au moins une deuxième portion (113) de matériau transparent vis-à-vis de la deuxième gamme de longueurs d'ondes disposée en regard de la matrice de détecteurs infrarouges (112).

8. Dispositif (10) selon la revendication 7, comportant en outre :
un premier filtre optique (16) couplé à la première portion (115, 117) de matériau transparent vis-à-vis de la première gamme de longueurs d'ondes et apte à réaliser un filtrage optique tel que seules les longueurs d'ondes destinées à être absorbées par le ou les gaz à détecter puissent traverser le premier filtre optique (16), et/ou
- un deuxième filtre optique (14) couplé à la deuxième portion (113) de matériau transparent vis-à-vis de la deuxième gamme de longueurs d'ondes et apte à réaliser un filtrage optique tel que seules les longueurs d'ondes de la deuxième gamme de longueurs d'ondes puissent traverser le deuxième filtre optique (14).

9. Dispositif (10) selon l'une des revendications précédentes, dans lequel la couche résistive (25) comporte du TiN et/ou du MoSi₂ et/ou du WSi₂.

10. Dispositif (10) selon l'une des revendications précédentes, comportant en outre un dispositif de réflexion optique (126) disposé dans une enceinte (125) destinée à contenir le ou les gaz à détecter et apte à réfléchir le premier rayonnement infrarouge émis par la première portion (25a) de la couche résistive (25) vers la deuxième portion (25b) de la couche résistive (25).

11. Dispositif (10) selon l'une des revendications précédentes, dans lequel la couche résistive (25) est telle que le rapport de la résistivité du matériau de la couche résistive (25) sur l'épaisseur de la couche résistive (25) est égal à environ 188 Ohms.

12. Procédé de réalisation d'un dispositif de détection infrarouge (10), comportant au moins la réalisation d'un dispositif de détection de gaz (11, 114, 116) obtenue par la mise en oeuvre des étapes de :
- réalisation, dans un substrat (109), d'au moins un premier circuit électronique (110, 1104, 1106) de commande et de lecture du dispositif de détection de gaz (11, 114, 116);
- dépôt d'au moins une couche de matériau sacrificiel (23) sur le substrat (109) ;
- dépôt d'au moins une couche résistive (25) sur la couche de matériau sacrificiel (23);
- gravure de la couche résistive (25) et de la couche de matériau sacrificiel (23), formant au moins une première portion (25a) de la couche résistive (25) apte à réaliser une émission d'un premier rayonnement infrarouge dans une première gamme de longueurs d'ondes aptes à être absorbées par le ou les gaz à détecter, et au moins une deuxième portion (25b) de la couche résistive (25) apte à absorber ledit premier rayonnement infrarouge après absorption par le ou les gaz à détecter et à produire de la chaleur;
- réalisation d'au moins un premier élément (28b) de transduction thermorésistive, le premier élément (28b) de transduction thermorésistive étant couplé thermiquement à la deuxième portion (25b) de la couche résistive (25) et disposé sur la deuxième portion (25b) de la couche résistive (25);
- réalisation de portions de matériau électriquement conducteur (26) reliant électriquement au moins la première portion (25a) de la couche résistive (25) et le premier élément (28b) de transduction thermorésistive au premier circuit électronique (110, 1104, 1106) ;
- élimination de la couche de matériau sacrificiel (23), les portions de matériau électriquement conducteur (26) assurant un maintien mécanique de la première portion (25a) et de la deuxième portion (25b) de la couche résistive (25) en regard du substrat (109) tel qu'une distance entre la première portion (25a) de la couche résistive (25) et le substrat (109) soit sensiblement égale à une distance entre la deuxième portion (25b) de la couche résistive (25) et le substrat (109) ;
le procédé comportant en outre la réalisation d'une matrice de détecteurs infrarouges (112) apte à produire une représentation infrarouge bidimensionnelle pour analyser ou détecter des mouvements et obtenue par la mise en oeuvre des étapes de :
- gravure de la couche résistive (25) telle qu'elle forme en outre une pluralité de troisièmes portions (25c) de la couche résistive (25) apte à absorber un deuxième rayonnement infrarouge dans une deuxième gamme de longueurs d'onde destiné à être détecté et à produire de la chaleur;
- réalisation d'une pluralité de deuxièmes éléments (28c) de transduction thermorésistive, chacun des deuxièmes éléments (28c) de transduction thermorésistive étant couplé thermiquement à l'une des troisièmes portions (25c) de la couche résistive (25) et disposé sur ladite une des troisièmes portions (25c) de la couche résistive (25);
- réalisation de portions de matériau électriquement conducteur (26) reliant électriquement les deuxièmes éléments (28c) de transduction thermorésistive à un deuxième circuit électronique (110, 1102) de commande et de lecture de la matrice de détecteurs infrarouges (112) réalisé dans le substrat (109), et assurant un maintien mécanique des troisièmes portions (25c) de la couche résistive (25) en regard du substrat (109) tel qu'une distance entre chacune des troisièmes portions (25c) de la couche résistive (25) et le substrat (109) est sensiblement égale à la distance entre la deuxième portion (25b) de la couche résistive (25) et le substrat (109),
les portions de matériau électriquement conducteur (26) formant des piliers soutenant mécaniquement les première, deuxième et troisième portions (25a, 25b, 25c) de la couche résistive (25).

13. Procédé selon la revendication 12, comportant en outre, avant le dépôt de la couche de matériau sacrificiel (23) sur le substrat (109), la réalisation, sur le substrat (109), de portions de matériau métallique réflecteur (22) telles que chaque portion de matériau métallique réflecteur (22) soit disposée entre le substrat (109) et l'une des troisièmes portions (25c) de la couche résistive (25), la distance entre ladite une des troisièmes portions (25c) de la couche résistive (25) et ladite portion de matériau métallique réflecteur (22) étant égale à environ un quart d'une longueur d'onde appartenant à la deuxième gamme de longueurs d'ondes et destinée à être détectée par la matrice de détecteurs infrarouges (112).

## Patentansprüche

1. Infraroterfassungsvorrichtung (10), enthaltend zumindest eine Gaserfassungsvorrichtung (11, 114, 116), die zumindest enthält:
- eine resistive Schicht (25), von welcher zumindest ein erster Abschnitt (25a) dazu geeignet ist, eine Emission einer ersten Infrarotstrahlung in einem ersten Bereich von Wellenlängen auszuführen, die dazu geeignet sind, von dem bzw. den zu erfassenden Gasen absorbiert zu werden, und von welcher zumindest ein zweiter Abschnitt (25b), der dazu geeignet ist, die erste Infrarotstrahlung nach Absorption von dem bzw. den zu erfassenden Gasen zu absorbieren und Wärme zu erzeugen, thermisch mit zumindest einem ersten thermoresistiven Wandlerelement (28b) gekoppelt ist, das an dem zweiten Abschnitt (25b) der resistiven Schicht (25) angeordnet ist;
- ein Substrat (109), das zumindest eine erste elektronische Schaltung (110, 1104, 1106) zum Steuern und Auslesen der Gaserfassungsvorrichtung (11, 114, 116) enthält;
- Abschnitte aus elektrisch leitfähigem Material (26), die zumindest den ersten Abschnitt (25a) der resistiven Schicht (25) und das erste thermoresistive Wandlerelement (28b) mit der ersten elektronischen Schaltung (110, 1104, 1106) elektrisch verbinden und einen mechanischen Halt des ersten Abschnitts (25a) und des zweiten Abschnitts (25b) der resistiven Schicht (25) gegenüber dem Substrat (109) sicherstellen, derart, dass ein Abstand zwischen dem ersten Abschnitt (25a) der resistiven Schicht (25) und dem Substrat (109) im Wesentlichen gleich einem Abstand zwischen dem zweiten Abschnitt (25b) der resistiven Schicht (25) und dem Substrat (109) ist;
wobei die Infraroterfassungsvorrichtung (10) ferner eine Matrix aus Infrarotdetektoren (112) enthält, die dazu geeignet ist, eine zweidimensionale Infrarotdarstellung zu erzeugen, um Bewegungen zu analysieren bzw. zu erfassen, und die derart ausgeführt ist, dass jeder Infrarotdetektor zumindest enthält:
- einen dritten Abschnitt (25c) der resistiven Schicht (25), der dazu geeignet ist, eine zu erfassende zweite Infrarotstrahlung in einem zweiten Wellenlängenbereich zu absorbieren und Wärme zu erzeugen, wobei der dritte Abschnitt (25c) thermisch mit zumindest einem zweiten thermoresistiven Wandlerelement (28c) gekoppelt ist, das an dem dritten Abschnitt (25c) der resistiven Schicht (25) angeordnet ist,
- Abschnitte aus elektrisch leitfähigem Material (26), welche das zweite thermoresistive Wandlerelement (28c) elektrisch mit einer in dem Substrat (109) ausgebildeten zweiten elektronischen Schaltung (110, 1102) zum Steuern und Auslesen der Matrix aus Infrarotdetektoren (112) verbinden und einen mechanischen Halt des dritten Abschnitts (25c) der resistiven Schicht (25) gegenüber dem Substrat (109) sicherstellen, derart, dass ein Abstand zwischen dem dritten Abschnitt (25c) der resistiven Schicht (25) und dem Substrat (10) im Wesentlichen gleich dem Abstand zwischen dem zweiten Abschnitt (25b) der resistiven Schicht (25) und dem Substrat (109) ist,
wobei die Abschnitte aus elektrisch leitfähigem Material (26) Stützen bilden, welche den ersten, den zweiten und den dritten Abschnitt (25a, 25b, 25c) der resistiven Schicht (25) mechanisch stützen.

2. Vorrichtung (10) nach Anspruch 1, wobei jeder Infrarotdetektor ferner zumindest einen Abschnitt aus metallischem Reflektormaterial (22) enthält, der zwischen dem Substrat (109) und dem dritten Abschnitt (25c) der resistiven Schicht (25) des Infrarotdetektors angeordnet ist, wobei der Abstand zwischen dem dritten Abschnitt (25c) der resistiven Schicht (25) und dem Abschnitt aus metallischem Reflektormaterial (22) in jedem der Infrarotdetektoren gleich etwa einem Viertel einer Wellenlänge ist, die zu dem zweiten Wellenlängenbereich gehört und dazu bestimmt ist, von dem Infrarotdetektor erfasst zu werden.

3. Vorrichtung (10) nach Anspruch 2, wobei jeder der dritten Abschnitte (25c) der resistiven Schicht (25) eine elektromagnetische Impedanz aufweist, die gleich dem Zweifachen einer elektromagnetischen Impedanz des zweiten Abschnitts (25b) der resistiven Schicht (25) ist.

4. Vorrichtung (10) nach einem der Ansprüche 1 bis 3, wobei die Matrix aus Infrarotdetektoren (112) optisch mit einem optischen Fokussierungssystem (122, 123) gekoppelt ist.

5. Vorrichtung (10) nach einem der vorangehenden Ansprüche, ferner enthaltend zumindest einen Materialabschnitt (28a), dessen Resistivität höher als die des Materials der resistiven Schicht (25) ist, der an dem ersten Abschnitt (25a) der resistiven Schicht (25) derart angeordnet ist, dass die erste Infrarotstrahlung durch den Materialabschnitt (28a) hindurch emittiert werden soll.

6. Vorrichtung (10) nach einem der vorangehenden Ansprüche, wobei das erste thermoresistive Wandlerelement (28b) einen ersten Abschnitt aus amorphem Silizium enthält und/oder das zweite resistive Wandlerelement (28c) einen zweiten Abschnitt aus amorphem Silizium enthält, und/oder, wenn die Vorrichtung (10) den Materialabschnitt (28a) enthält, dessen Resistivität höher als die des Materials der resistiven Schicht (25) ist, der Materialabschnitt (28a) auf Basis von amorphem Silizium besteht.

7. Vorrichtung (10) nach einem der vorangehenden Ansprüche, ferner enthaltend ein Gehäuse (118), in welchem die Gaserfassungsvorrichtung (11, 114, 116) und/oder die Matrix aus Infrarotdetektoren (112) hermetisch eingeschlossen sind, wobei das Gehäuse (118) zumindest einen ersten Abschnitt (115, 117) aus für den ersten Wellenlängenbereich durchlässigem Material enthält, welcher der Gaserfassungsvorrichtung (11, 114, 116) gegenüberliegend angeordnet ist, und/oder zumindest einen zweiten Abschnitt (113) aus für den zweiten Wellenlängenbereich durchlässigem Material, welcher der Matrix aus Infrarotdetektoren (112) gegenüberliegend angeordnet ist.

8. Vorrichtung (10) nach Anspruch 7, ferner enthaltend:
- ein erstes optisches Filter (16), das mit dem ersten Abschnitt (115, 117) aus für den ersten Wellenlängenbereich durchlässigem Material gekoppelt und dazu geeignet ist, eine optische Filterung durchzuführen, derart, dass nur diejenigen Wellenlängen, die von dem bzw. den zu erfassenden Gasen absorbiert werden sollen, durch das erste optische Filter (16) treten können, und/oder
- ein zweites optisches Filter (14), das mit dem zweiten Abschnitt (113) aus für den zweiten Wellenlängenbereich durchlässigem Material gekoppelt und dazu geeignet ist, eine optische Filterung durchzuführen, derart, dass nur Wellenlängen aus dem zweiten Wellenlängenbereich durch das zweite optische Filter (14) treten können.

9. Vorrichtung (10) nach einem der vorangehenden Ansprüche, wobei die resistive Schicht (25) TiN und/oder MoSi₂ und/oder WSi₂ enthält.

10. Vorrichtung (10) nach einem der vorangehenden Ansprüche, ferner enthaltend eine optische Reflexionsvorrichtung (126), die in einer Kammer (125) angeordnet ist, welche dazu bestimmt ist, das bzw. die zu erfassenden Gase zu enthalten, und dazu geeignet ist, die von dem ersten Abschnitt (25a) der resistiven Schicht (25) emittierte erste Infrarotstrahlung zum zweiten Abschnitt (25b) der resistiven Schicht (25) zu reflektieren.

11. Vorrichtung (10) nach einem der vorangehenden Ansprüche, wobei die resistive Schicht (25) derart ist, dass das Verhältnis der Resistivität des Materials der resistiven Schicht (25) zur Dicke der resistiven Schicht (25) gleich etwa 188 Ohm beträgt.

12. Verfahren zum Herstellen einer Infraroterfassungsvorrichtung (10), umfassend zumindest das Herstellen einer Gaserfassungsvorrichtung (11, 114, 116), das durch Ausführen der nachfolgenden Schritte erhalten wird:
- Herstellen zumindest einer ersten elektronischen Schaltung (110, 1104, 1106) zum Steuern und Auslesen der Gaserfassungsvorrichtung (11, 114, 116) in einem Substrat (109);
- Abscheiden zumindest einer Opfermaterialschicht (23) auf das Substrat (109);
- Abscheiden zumindest einer resistiven Schicht (25) auf die Opfermaterialschicht (23);
- Ätzen der resistiven Schicht (25) und der Opfermaterialschicht (23), wodurch zumindest ein erster Abschnitt (25a) der resistiven Schicht (25) gebildet wird, der dazu geeignet ist, eine Emission einer ersten Infrarotstrahlung in einem ersten Bereich von Wellenlängen durchzuführen, die dazu geeignet sind, von dem bzw. den zu erfassenden Gasen absorbiert zu werden, sowie zumindest ein zweiter Abschnitt (25b) der resistiven Schicht (25), der dazu geeignet ist, die erste Infrarotstrahlung nach Absorption durch das bzw. die zu erfassenden Gase zu absorbieren und Wärme zu erzeugen;
- Herstellen zumindest eines ersten thermoresistiven Wandlerelements (28b), wobei das erste thermoresistive Wandlerelement (28b) thermisch mit dem zweiten Abschnitt (25b) der resistiven Schicht (25) gekoppelt und an dem zweiten Abschnitt (25b) der resistiven Schicht (25) angeordnet ist;
- Herstellen von Abschnitten aus elektrisch leitfähigem Material (26), welche zumindest den ersten Abschnitt (25a) der resistiven Schicht (25) und das erste thermoresistive Wandlerelement (28b) mit der ersten elektronischen Schaltung (110, 1104, 1106) verbinden;
- Beseitigen der Opfermaterialschicht (23), wobei die Abschnitte aus elektrisch leitfähigem Material (26) einen mechanischen Halt des ersten Abschnitts (25a) und des zweiten Abschnitts (25b) der resistiven Schicht (25) gegenüber dem Substrat (109) sicherstellen, derart, dass ein Abstand zwischen dem ersten Abschnitt (25a) der resistiven Schicht (25) und dem Substrat (109) im Wesentlichen gleich einem Abstand zwischen dem zweiten Abschnitt (25b) der resistiven Schicht (25) und dem Substrat (109) ist;
wobei das Verfahren ferner das Herstellen einer Matrix aus Infrarotdetektoren (112) umfasst, die dazu geeignet ist, eine zweidimensionale Infrarotdarstellung zu erzeugen, um Bewegungen zu analysieren bzw. zu erfassen, und durch Ausführen der nachfolgenden Schritte erhalten wird:
- Ätzen der resistiven Schicht (25) derart, dass sie ferner eine Mehrzahl von dritten Abschnitten (25c) der resistiven Schicht (25) bildet, die dazu geeignet ist, eine zweite Infrarotstrahlung in einem zu erfassenden zweiten Wellenlängenbereich zu absorbieren und Wärme zu erzeugen;
- Herstellen einer Mehrzahl von zweiten thermoresistiven Wandlerelementen (28c), wobei jedes der zweiten thermoresistiven Wandlerelemente (28c) thermisch mit einem der dritten Abschnitte (25c) der resistiven Schicht (25) gekoppelt und an dem einen der dritten Abschnitte (25c) der resistiven Schicht (25) angeordnet ist,
- Herstellen von Abschnitten aus elektrisch leitfähigem Material (26), welche die zweiten thermoresistiven Wandlerelemente (28c) elektrisch mit einer in dem Substrat (109) ausgebildeten zweiten elektronischen Schaltung (110, 1102) zum Steuern und Auslesen der Matrix aus Infrarotdetektoren (112) verbinden und einen mechanischen Halt der dritten Abschnitte (25c) der resistiven Schicht (25) gegenüber dem Substrat (109) sicherstellen, derart, dass ein Abstand zwischen den dritten Abschnitten (25c) der resistiven Schicht (25) und dem Substrat (109) im Wesentlichen gleich dem Abstand zwischen dem zweiten Abschnitt (25b) der resistiven Schicht (25) und dem Substrat (109) ist,
wobei die Abschnitte aus elektrisch leitfähigem Material (26) Stützen bilden, welche den ersten, den zweiten und den dritten Abschnitt (25a, 25b, 25c) der resistiven Schicht (25) mechanisch stützen.

13. Verfahren nach Anspruch 12, ferner umfassend vom dem Abscheiden der Opfermaterialschicht (23) auf das Substrat (109) das Herstellen von Abschnitten aus metallischem Reflektormaterial (22) auf dem Substrat (109), derart, dass jeder Abschnitt aus metallischem Reflektormaterial (22) zwischen dem Substrat (109) und einem der dritten Abschnitte (25c) der resistiven Schicht (25) angeordnet ist, wobei der Abstand zwischen einem der dritten Abschnitte (25c) der resistiven Schicht (25) und dem Abschnitt aus metallischem Reflektormaterial (22) gleich etwa einem Viertel einer Wellenlänge ist, die zu dem zweiten Wellenlängenbereich gehört und dazu bestimmt ist, von der Matrix aus Infrarotdetektoren (112) erfasst zu werden.

## Claims

1. An infrared detection device (10) comprising at least one gas detection device (11, 114, 116) that comprises at least:
- a resistive layer (25), at least a first portion (25a) of which is able to emit a first infrared radiation in a first range of wavelengths able to be absorbed by the gas or gases to be detected, and at least a second portion (25b) of which is able to absorb said first infrared radiation after absorption by the gas or gases to be detected and to produce heat and is thermally coupled to at least one first thermoresistive transduction element (28b) which is arranged on the second portion (25b) of the resistive layer (25) ;
- a substrate (109) comprising at least one first electronic circuit (110, 1104, 1106) for controlling and reading the gas detection device (11, 114, 116);
- portions of electrically conductive material (26) electrically connecting at least the first portion (25a) of the resistive layer (25) and the first thermoresistive transduction element (28b) to the first electronic circuit (110, 1104, 1106), and providing mechanical holding of the first portion (25a) and second portion (25b) of the resistive layer (25) opposite the substrate (109) so that a distance between the first portion (25a) of the resistive layer (25) and the substrate (109) is substantially equal to a distance between the second portion (25b) of the resistive layer (25) and the substrate (109);
the infrared detection device (10) further comprising a matrix of infrared detectors (112) able to produce a two-dimensional infrared representation to analyze or detect movements and such that each infrared detector comprises at least:
- a third portion (25c) of the resistive layer (25) able to absorb a second infrared radiation in a second range of wavelengths intended to be detected and to produce heat, said third portion (25c) being thermally coupled to at least a second thermoresistive transduction element (28c) which is arranged on the third portion (25c) of the resistive layer (25);
- portions of electrically conductive material (26) electrically connecting the second thermoresistive transduction element (28c) to a second electronic circuit (110, 1102) controlling and reading the matrix of infrared detectors (112) implemented in the substrate (109), and providing mechanical holding of the third portion (25c) of the resistive layer (25) opposite the substrate (109) such that a distance between the third portion (25c) of the resistive layer (25) and the substrate (109) is substantially equal to the distance between the second portion (25b) of the resistive layer (25) and the substrate (109),
in which the portions of electrically conductive material (26) form pillars which mechanically hold the first, second and third portions (25a, 25b, 25c) of the resistive layer (25).

2. The device (10) according to claim 1, in which each infrared detector also comprises at least one portion of reflective metal material (22) arranged between the substrate (109) and the third portion (25c) of the resistive layer (25) of the infrared detector, the distance between the third portion (25c) of the resistive layer (25) and the portion of reflective metal material (22), in each of the infrared detectors, being equal to approximately one quarter of a wavelength belonging to the second range of wavelengths and intended to be detected by the infrared detector.

3. The device (10) according to claim 2, in which each of the third portions (25c) of the resistive layer (25) comprises an electromagnetic impedance substantially equal to twice an electromagnetic impedance of the second portion (25b) of the resistive layer (25).

4. The device (10) according to one of claims 1 to 3, in which the matrix of infrared detectors (112) is optically coupled to an optical focusing system (122, 123).

5. The device (10) according to one of previous claims, also comprising at least one portion of material (28a) the resistivity of which is greater than that of the material of the resistive layer (25), arranged on the first portion (25a) of the resistive layer (25) so that the first infrared radiation is intended to be emitted through said portion of material (28a).

6. The device (10) according to one of previous claims, wherein the first thermoresistive transduction element (28b) comprises a first portion of amorphous silicon and/or the second thermoresistive transduction element (28c) comprises a second portion of amorphous silicon and/or, when the device (10) comprises the portion of material (28a) the resistivity of which is greater than that of the material of the resistive layer (25), said portion of material (28a) comprises amorphous silicon.

7. The device (10) according to one of previous claims, further comprising a housing (118) in which the gas detection device (11, 114, 116) and/or the matrix of infrared detectors (112) are hermetically enclosed, the housing (118) comprising at least a first portion (115, 117) of material transparent towards the first range of wavelengths arranged opposite the gas detection device (11, 114, 116) and/or at least a second portion (113) of material transparent towards the second range of wavelengths arranged opposite the matrix of infrared detectors (112).

8. The device (10) according to claim 7, further comprising:
- a first optical filter (16) coupled to the first portion (115, 117) of material transparent towards the first range of wavelengths and able to effect an optical filtering such that only the wavelengths intended to be absorbed by the gas or gases to be detected can pass through the first optical filter (16);
- a second optical filter (14) coupled to the second portion (113) of material transparent towards the second range of wavelengths and able to effect an optical filtering such that only the wavelengths of the second range of wavelengths can pass through the second optical filter (14).

9. The device (10) according to one of previous claims, in which the restive layer (25) comprises TiN and/or MoSi₂ and/or WSi₂.

10. The device (10) according to one of previous claims, further comprising an optical reflection device (126) arranged in an enclosure (125) intended to contain the gas or gases to be detected and able to reflect the first infrared radiation emitted by the first portion (25a) of the resistive layer (25) towards the second portion (25b) of the resistive layer (25).

11. The device (10) according to one of previous claims, in which the resistive layer (25) is such that the ratio of the resistivity of the material of the resistive layer (25) to the thickness of the resistive layer (25) is approximately 188 Ohms.

12. A method for producing an infrared detection device (10), comprising at least the production of a gas detection device (11, 114, 116) obtained by implementing the steps of:
- producing, in a substrate (109), at least one first electronic circuit (110, 1104, 1106) for controlling and reading the gas detection device (11, 114, 116);
- depositing at least one layer of sacrificial material (23) on the substrate (109);
- depositing at least one resistive layer (25) on the layer of sacrificial material (23);
- etching the resistive layer (25) and the layer of sacrificial material (23), forming at least one first portion (25a) of the resistive layer (25) able to emit a first infrared radiation in a first range of wavelengths able to be absorbed by the gas or gases to detected, and at least one second portion (25b) of the resistive layer (25) able to absorb said first infrared radiation after absorption by the gas or gases to be detected and to produce heat;
- producing at least a first thermoresistive transduction element (28b), the first thermoresistive transduction element (28b) being thermally coupled to the second portion (25b) of the resistive layer (25) and arranged on the second portion (25b) of the resistive layer (25);
- producing portions of electrically conductive material (26) electrically connecting at least the first portion (25a) of the resistive layer (25) and the first thermoresistive transduction element (28b) to the first electronic circuit (110, 1104, 1106);
- eliminating the layer of sacrificial material (23), the portions of electrically conductive material (26) providing a mechanical holding of the first portion (25a) and second portion (25b) of the resistive layer (25) opposite the substrate (109) such that a distance between the first portion (25a) of the resistive layer (25) and the substrate (109) is substantially equal to a distance between the second portion (25b) of the resistive layer (25) and the substrate (109);
the method further comprising the production a matrix of infrared detectors (112) able to produce a two-dimensional infrared representation to analyze or detect movements, and obtained by implementing the steps of:
- etching the resistive layer (25) so that it also forms a plurality of third portions (25c) of the resistive layer (25) able to absorb a second infrared radiation in a second range of wavelengths intended to be detected and to produce heat;
- producing a plurality of second thermoresistive transduction elements (28c), each of the second thermoresistive transduction elements (28c) being thermally coupled to one of the third portions (25c) of the resistive layer (25) and arranged on said one of the third portions (25c) of the resistive layer (25);
- producing portions of electrically conductive material (26) electrically connecting the second thermoresistive transduction elements (28c) to a second electronic circuit (110, 1102) for controlling and reading the matrix of infrared detectors (112) produced in the substrate (109), and providing mechanical holding of the third portions (25c) of the resistive layer (25) opposite the substrate (109) such that a distance between each of the third portions (25c) of the resistive layer (25) and the substrate (109) is substantially equal to the distance between the second portion (25b) of the resistive layer (25) and the substrate (109),
in which the portions of electrically conductive material (26) form pillars which mechanically hold the first, second and third portions (25a, 25b, 25c) of the resistive layer (25).

13. The method according to claim 12, further comprising, before the deposition of the layer of sacrificial material (23) on the substrate (109), the production, on the substrate (109), of portions of reflective metal material (22) such that each portion of reflective metal material (22) is arranged between the substrate (109) and one of the third portions (25c) of the resistive layer (25), the distance between said one of the third portions (25c) of the resistive layer (25) and said portion of reflective metal material (22) being equal to approximately one quarter of a wavelength belonging to the second range of wavelengths and intended to be detected by the matrix of infrared detectors (112).
